# EUROPÄISCHE PATENTANMELDUNG

(11) **EP 4 230 685 A1**
(43) Veröffentlichungstag der Anmeldung: **23.08.2023**
(21) Anmeldenummer: 22157597.0
(22) Anmeldetag: 18.02.2022
(51) Int. Cl.: C08J 5/04, C08J 5/18, E04B 1/74

(54) **FLAMMSCHUTZ-VERBUNDMATERIAL**

(71) Anmelder: Salamander SPS GmbH & Co. KG, 86842 Türkheim (DE)
(72) Erfinder: SCHMIEDEKNECHT, Götz, 82166 Gräfelfing (DE)
(74) Vertreter: Schmid, Nils T.F.

(57) **Zusammenfassung**

Die vorliegende Erfindung betrifft ein Verbundmaterial umfassend ein Fasermaterial, ein Bindemittel und ein halogenfreies Flammschutzmittel.

## Beschreibung

Die Erfindung betrifft ein Verbundmaterial, ein Erzeugnis, das das Verbundmaterial umfasst, sowie die Verwendung desselben und ein Verfahren zum Herstellen eines Verbundmaterials.

Ein Verbundmaterial ist ein Werkstoff aus zwei oder mehr verbundenen Materialien, der andere Werkstoffeigenschaften besitzt als seine einzelnen Komponenten. Für die Eigenschaften der Verbundwerkstoffe sind stoffliche Eigenschaften und Geometrie der Komponenten von Bedeutung. Die Verbindung erfolgt durch Stoff- oder Formschluss oder eine Kombination von beidem.

Ein Beispiel für ein bekanntes Verbundmaterial sind sogenannte Lederfaserstoffe bzw. Faserkunstleder. Dies sind Materialien, die vor allem aus Fasern, insbesondere Lederfasern, einem geeigneten Bindemittel und ggf. weiteren Additiven bestehen. Lederfaserstoffe werden etwa für Hinterkappen, Absätze, Lauf- und Brandsohlen sowie für sogenanntes Rahmenmaterial eingesetzt, aber auch in der Lederwaren- und Möbelindustrie und in der Buchbinderei. Gemäß dem Stand der Technik werden als Fasern vor allem Lederfasern, die als Abfallprodukt der Lederherstellung entstehen, und Naturkautschuk als Bindemittel eingesetzt. Ein derartiges thermoplastisches Verbundmaterial auf Lederfaser-Basis, welches zu einem flächigen Erzeugnis weiterverarbeitet und zur Ummantelung oder Kaschierung und Beschichtung von Möbelfronten oder KFZ-Innenraumflächen und für ähnliche Oberflächenveredelungen eingesetzt wird, um eine bestimmte Haptik oder Optik zu erzeugen, ist aus der WO 2020/212062 A1 bekannt. Es bestehen somit bereits Ansätze, die Nachhaltigkeit derartiger Verbundmaterialien zu steigern. Die weltweit anfallenden Mengen an zu entsorgenden Lederprodukten und anderen zu entsorgenden Materialien ist jedoch deutlich größer als die Nachfrage nach Fasermaterial, insbesondere Lederfasermaterial, enthaltenden Verbundmaterialien, wie Lederfaserstoffe, in denen diese wiederverwendet werden können, sodass die damit einhergehenden Entsorgungsprobleme nur teilweise gelöst werden.

Aus WO 2006 / 136 550 A1 ist es bekannt, Lederfaserstoffe mit flammhemmenden Zusatzstoffen, insbesondere Flacavon^{®} B 45 und Flacavon^{®} H 14-67 45 der Firma Schill & Seilacher, zu versetzen. Durch den damit einhergehenden erhöhten Flammschutz konnten bereits weitere Einsatzgebiete für Lederfaserstoffe erschlossen werden. Die dadurch gesteigerte Nachfrage reicht jedoch bei Weitem nicht aus, um die anfallenden Mengen an zu entsorgenden Lederprodukten ausschöpfen zu können, sodass die damit einhergehenden Entsorgungsprobleme weiterhin nicht ausreichend gelöst werden. Darüber hinaus besteht der Bedarf nach umweit- und gesundheitsverträglicheren Flammschutz.

Im Rahmen der vorliegenden Erfindung wurde erkannt, dass derartig eingesetzte Verbundmaterialien nicht nur dazu verwendet werden können, eine gewünschte Optik und/oder Haptik zu erzeugen, sondern auch dazu in der Lage sind, weitere Funktionen zu übernehmen.

Eine Aufgabe der vorliegenden Erfindung besteht darin, die Nachteile aus dem Stand der Technik zu überwinden, insbesondere ein Verbundmaterial mit größerer Flexibilität bzgl. Einsatzmöglichkeiten zu schaffen, insbesondere mit einer flammhemmenden Wirkung zu schaffen, ohne die Eigenschaften insbesondere in Bezug auf die Verarbeitbarkeit des Verbundmaterials zu beeinträchtigen, bei gleichzeitiger Bereitstellung einer gewünschten Design-Optik, insbesondere eines Glitzern, und/oder Haptik der Oberfläche des Verbundmaterials und/oder unter Verbesserung oder zumindest Aufrechterhaltung der Umwelt- und Gesundheitsverträglichkeit
Die Aufgabe wird durch die Gegenstände der unabhängigen Ansprüche gelöst.

Gemäß einem ersten Aspekt der vorliegenden Erfindung ist ein Verbundmaterial bereitgestellt, welches zur Weiterverarbeitung zu einem bahnförmigen, flächigen Erzeugnis verwendet werden kann. Erfindungsgemäße Verbundmaterialien und/oder daraus hergestellte bahnförmige, flächige Erzeugnisse können insbesondere zur Beschichtung, insbesondere von Wand-, Boden-, Decken- oder Fensterrahmenpanelen, aber auch zur Herstellung von Belägen, Wandelementen, Überzugsmaterial, Schuhkomponenten und Modeaccessoires eingesetzt werden.

Ein Verbundmaterial ist insbesondere ein Werkstoff aus zwei oder mehr verbundenen Materialien, der andere Werkstoffeigenschaften besitzt als seine einzelnen Komponenten. Für die Eigenschaften der Verbundwerkstoffe sind insbesondere stoffliche Eigenschaften und Geometrie der Komponenten von Bedeutung. Die Verbindung erfolgt insbesondere durch Stoff- oder Formschluss oder eine Kombination von beidem.

Das erfindungsgemäße Verbundmaterial umfasst ein Fasermaterial und ein Bindemittel. Insbesondere sind Fasermaterial und Bindemittel derart aufeinander abgestimmt, dass das Bindemittel in dem Verbundmaterial keine durchgängige Phase bildet, beispielsweise das Verbundmaterial ein, bindemittelgebundener, d.h. etwa ein polymergebundener Vliesstoff ist. Dadurch kann insbesondere vermieden werden, dass das Verbundmaterial sich bei, insbesondere unbeabsichtigter, Erwärmung plastisch verformt. Insbesondere kann das Bindemittel eine Glasübergangstemperatur von weniger als 20°C aufweisen.

Vorzugsweise zeichnet sich das Verbundmaterial dadurch aus, dass es kein thermoplastisches Verhalten aufweist, also unter Wärmeeinfluss nicht (bzw. nicht wesentlich) plastisch verformbar ist (erweicht). Entsprechende Ausführungsformen werden nachfolgend als nicht-thermoplastisches Verbundmaterial bezeichnet. Vorzugsweise nimmt die Bruchdehnung des nicht-thermoplastischen Verbundmaterials insbesondere unter Wärmeeinfluss nicht zu sondern ab. Dies bedeutet insbesondere, dass thermoplastische Effekte für das nicht-thermoplastische Verbundmaterial auf makroskopische Ebene nicht beobachtet werden können. Dies kann insbesondere dadurch erreicht werden, dass das Bindemittel nicht in einer durchgängigen Phase vorhanden ist. Das Bindemittel liegt also nicht als eine im Wesentlichen monolithische Struktur (Matrix) vor, in der das Fasermaterial eingebettet ist. Vielmehr ist das Bindemittel in dem nicht-Verbundmaterial in einer Vielzahl diskreter, d.h. räumlich voneinander getrennter Abschnitte vorhanden. Hierdurch wird insbesondere eine verbesserte Temperaturbeständigkeit des Verbundmaterials gegenüber bekannten, insbesondere thermoplastischen Verbundmaterialien erreicht.

Es kann etwa vorgesehen sein, dass das Verbundmaterial in der Form eines bindemittel(polymer)gebundenen Vliesstoffs vorliegt, in dem diskrete, voneinander getrennte Bindemittelmengen die Bindung der Fasern des Vliesstoffs zueinander verstärken. Eine solche Struktur zeichnet sich insbesondere durch sein nicht-thermoplastisches Verhalten und Betonung der Fasereigenschaften (Offenporigkeit, Feuchtigkeitsregulierung, gute Verklebbarkeit) aus.

Es kann vorgesehen sein, dass das Verbundmaterial eine geringe Gesamtemission nach VDA 277 oder VDA 278 aufweist. Insbesondere kann vorgesehen sein, dass das Verbundmaterial Gesamtemission von weniger als 250 µgC/g nach VDA 277 aufweist. Es kann ebenfalls vorgesehen sein, dass das Verbundmaterial Gesamtemission von weniger als 200 µg/g nach VDA 278 und/oder einen Fog-Wert von < 1000 µg/g aufweist. Es kann vorgesehen sein, dass das Verbundmaterial eine Gesamtemission nach AgBB/DIN EN ISO 16000 von < 0,001 mg/m³ aufweist. Es kann vorgesehen sein, dass das Verbundmaterial eine TVOC 3d (total volatile organic compound; 3 Tage) Emission von < 10 mg/m³ aufweist. Die angegebenen Normen VDA 277, VDA 278, DIN EN ISO 16000, AgBB und TVOC 3d beziehen sich jeweils auf die zum Anmeldetag (Prioritätstag) gültige Fassung.

Die Gesamtemission und/oder die TVOC-Emission des Verbundmaterials können entweder durch die Auswahl geeigneter Bestandteile, insbesondere eines geeigneten Bindemittels, etwa durch ein geeignetes Herstellungsverfahren desselben, und geeigneter Additive, erreicht werden. Es kann etwa vorgesehen sein, dass zum Zweck der Emissionsreduktion ein Bindemittel mit einem geringen Anteil an Restmonomer(en) und/oder anderen Emittenten verwendet wird.

Alternativ kann die Gesamtemission und/oder die TVOC-Emission des Verbundmaterials gemäß den obigen Ausführungsformen dadurch erreicht werden, dass entweder das Verbundmaterial oder ein oder mehrerer Materialien, die zur Herstellung des Verbundmaterials verwendet werden, einer chemischen oder physikalischen Reinigungs- und Desodorierungsprozedur unterworfen wurden. Geeignete chemische oder physikalische Reinigungs- und Desodorierungsprozeduren sind etwa eine Nachpolymerisation, ein Steam-Stripping- oder Gas-Stripping-Schritt oder eine Membranfiltration oder Kombinationen daraus. Ein entsprechendes Verfahren ist etwa aus der EP 0 967 232 A1 bekannt.

Wie den weiter unten beschriebenen Beispielen entnehmbar ist wurde festgestellt, dass mit dem bindemittel(polymer)gebundenen Vliesstoff, insbesondere im Vergleich zu einem Verbundmaterial mit durchgängiger Phase, gewünschte mechanische Eigenschaften, insbesondere hinsichtlich Elastizität, Biegesteifigkeit, Luftdurchlässigkeit und Wasserdampf-Speicherfähigkeit bereitgestellt werden können, was insbesondere für den Einsatz des Verbundmaterials bei den weiter unten beschriebenen Einsatzgebieten von Vorteil ist.

Das erfindungsgemäße Verbundmaterial umfasst ein Fasermaterial. Unter Fasermaterial ist insbesondere ein Material zu verstehen, das eine Vielzahl von Fasern aufweist. Vorzugsweise umfasst Fasermaterial im Sinne der vorliegenden Erfindung, bezogen auf das Gesamtgewicht des Fasermaterials, einen Faseranteil von wenigstens 30 Gew.-%, 40 Gew.-%, 50 Gew.-%, 60 Gew.-%, 70 Gew.-%, 80 Gew.-%, 90 Gew.-%, 95 Gew.-%, 99 Gew.-% oder 100 Gew.-%. Das Fasermaterial kann insbesondere eine Vielzahl von miteinander verzweigten Fasern aufweisen. Unter einer Faser kann im Allgemeinen ein lineares, elementares Gebilde verstanden werden, das aus einem Faserstoff besteht und dessen zumindest äußere Faserform im Wesentlichen eine Längsform aufweist und welches zumindest eine in Bezug auf die Dicke deutlich größere Längserstreckung aufweist. Insbesondere ist unter einer Faser ein Gebilde zu verstehen, dessen Längserstreckung deutlich größer ist, insbesondere wenigstens 3-mal, 5-mal, 10-mal, 20-mal oder 50-mal so groß, wie dessen Dicke, insbesondere Radialerstreckung. Unter der Längserstreckung ist insbesondere die Länge einer Faser im gestrecktem (geradlinigen) Zustand zu verstehen. Vorzugsweise weist eine Faser im Sinne der vorliegenden Erfindung eine Längserstreckung von mindestens 0,02 mm, 0,03 mm, 0,05 mm, 0,1 mm, 0,2 mm, 0,3 mm, 0,4 mm oder 0,5 mm auf. Unter einer Faserform ist insbesondere keine Pulverform zu verstehen und umgekehrt. Im Gegensatz zu einer Faserform zeichnet sich eine Pulverform insbesondere durch ein nicht lineares oder längsförmiges Gebilde, insbesondere durch ein räumliches, insbesondere kugel- oder klumpenförmiges Gebilde aus. Insbesondere zeichnet sich eine Pulverform durch eine im Wesentlichen gleiche Erstreckung in zumindest zwei, vorzugsweise drei, zueinander orthogonale Richtungen aus. Unter im Wesentlich gleich ist insbesondere eine Abweichung von maximal dem 2.5-fachen, 2-fachen, 1.5-fachen oder dem 1-fachen der kleinsten Erstreckung in eine der Richtungen zu verstehen. Insbesondere ist unter einer Pulverform eine Form zu verstehen, dessen größte Erstreckung kleiner ist als 0,02 mm, 0,03 mm, 0,05 mm, 0,1 mm, 0,2 mm, 0,3 mm, 0,4 mm oder 0,5 mm.

Vorzugsweise umfasst das Fasermaterial organisches Fasermaterial. Unter organischem Fasermaterial ist insbesondere sowohl natürlich gewonnenes als auch natürlich gewinnbares Fasermaterial zu verstehen, wobei auch synthetisch hergestellte Fasern umfasst sind, solange diese auf organischer Basis (natürliche Materialien) beruhen. Das heißt insbesondere Fasermaterial kann bereits in der Natur in faserförmigen Zustand vorkommen (natürlich gewonnen) und/oder es kann durch einen Behandlungsschritt in eine faserige Struktur überführt werden (natürlich gewinnbar). Unter den organischen Materialien sind insbesondere sowohl pflanzliche Fasermaterialien (Pflanzenfasermaterial) als auch tierische Fasermaterialien, wie Lederfasermaterialien, Wollfasermaterialien und Seidenfasermaterialien, geeignet. Besonders bevorzugt umfasst das organische Fasermaterial Lederfasermaterial.

Vorzugsweise umfasst wenigstens 10 Gew.-%, 20 Gew.-%, 30 Gew.-%, 40 Gew.-%, 50 Gew.-%, 60 Gew.-%, 70 Gew.-%. 80 Gew.-%, 90 Gew.-%, 95 Gew.-%, 99 Gew.-% oder 100 Gew.-% des Fasermaterials, bezogen auf das Gesamtgewicht des Fasermaterials, organisches Fasermaterial, vorzugsweise natürlich gewonnenes Fasermaterial. Insbesondere durch den Einsatz von natürlich gewonnenem Fasermaterial fällt der energieaufwendige Behandlungsschritt zur Herstellung der faserigen Struktur wenigstens teilweise weg, was die ökologische Verträglichkeit des Verbundmaterials steigert.

Des Weiteren umfasst das erfindungsgemäße Verbundmaterial ein Bindemittel. Vorzugsweise beträgt der Anteil des Bindemittels, bezogen auf das Gesamtgewicht des Verbundmaterials, wenigstens 3 Gew.-%, 5 Gew.-%, 10 Gew.-%, 15 Gew.-%, 20 Gew.-% oder 25 Gew.-% und/oder höchstens 60 Gew.-%, 50 Gew.-%, 40 Gew.-%, 35 Gew.-% oder 30 Gew.-%. Insbesondere beträgt der Anteil des Bindemittels, bezogen auf das Gesamtgewicht des Verbundmaterials, 5 bis 60 Gew.-%, vorzugsweise 10 bis 50 Gew.-%, besonders bevorzugt 20 bis 35 Gew-%. Insbesondere die Untergrenze von 20 Gew.-% hat sich als vorteilhaft erwiesen, um dem Verbundmaterial für die nachfolgend beschriebenen Einsatzgebiete die erforderlichen mechanischen Eigenschaften, wie Flexibilität, zu verleihen. Ein Überschreiten der Obergrenze von 60 Gew.-% kann insbesondere dazu führen, dass das Bindemittel nicht mehr vollständig in dem Fasermaterial gebunden wird, was zu Produktionsproblemen führen kann. Ferner kann ein Überschreiten der Obergrenze von 35 Gew.-%, insbesondre von 50 Gew.-%, den für das Fasermaterial verfügbaren Anteil derart reduzieren, dass das Verbundmaterial eine zu geringe Festigkeit für die nachfolgend beschriebenen Einsatzgebiete aufweist.

Das Bindemittel kann einen biologisch abbaubaren Anteil von wenigstens 20 Gew.-%, bezogen auf das Gesamtgewicht des Bindemittels aufweisen. Vorzugsweise beträgt der biologisch abbaubare Anteil des Bindemittels wenigstens 30 Gew.-%, 40 Gew.-%, 50 Gew.-%, 60 Gew.-%, 70 Gew.-%, 80 Gew.-%, 90 Gew.-%, 95 Gew.-%, 99 Gew.-% oder 100 Gew.-%, bezogen auf das Gesamtgewicht des Bindemittels. Überraschenderweise hat sich herausgestellt, dass es bei dem Einsatz des Verbundmaterials entgegen der Auffassung aus dem Stand der Technik nicht immer auf die thermoplastische Verformbarkeit ankommt, diese wie zuvor beschrieben sogar nachteilig sein kann, sodass auf die aus dem Stand der Technik bekannten Styrol-Acrylate im Bindemittel verzichtet werden kann. Insbesondere beim Einsatz des Verbundmaterials für die folgenden beschriebenen Anwendungsgebiete kommt es nicht auf die thermoplastische Verformbarkeit des Verbundmaterials an. Es wurde überraschenderweise festgestellt, dass, insbesondere bei diesen Anwendungsgebieten, ein hoher Anteil an biologisch abbaubaren Bindemitteln eingesetzt werden kann, ohne für die entsprechenden Anwendungsgebiete maßgebliche mechanische Eigenschaften des Verbundmaterials, insbesondere hinsichtlich Biegsamkeit und Wasserdampfspeicherfähigkeit, zu verlieren. Dadurch kann die biologische Abbaubarkeit und somit auch die Nachhaltigkeit des gesamten Verbundmaterials deutlich erhöht werden. Überraschenderweise wurde festgestellt, dass sogar Verbundmaterialien genutzt werden können, deren Fasermaterial zu 100% aus Pflanzenfasermaterial und deren Bindemittel zu 100% aus biologisch abbaubaren Bindemitteln bestehen, was zu vollständig biologisch abbaubaren Verbundwerkstoffen führen kann.

Unter biologisch abbaubar sind insbesondere Bindemittel zu verstehen, welche die Anforderungen der Norm ASTM-D6400-19, insbesondere die in den Abschnitten 5 und 6 definierten Tests erfüllen. Demnach kann die Formulierung "biologisch abbaubar" gemäß diesem Aspekt der Erfindung alternativ auch als "kompostierbar gemäß ASTM-D6400-19" bezeichnet werden.

Vorzugsweise umfasst das Bindemittel zumindest ein Polymer, insbesondere besteht es aus zumindest einem Polymer, wobei das Polymer ausgewählt ist aus der Gruppe, bestehend aus Polyester, insbesondere aliphatischer Polyester, Polyamid, Polyacetal, Polyvinylalkohol, Polylactid, Polyurethan, Kautschuk, insbesondere Naturkautschuk, Polyvinylester, insbesondere Polyvinylacetat, Polybutadien, Zellulose und deren Derivate, Stärke und deren Derivate, einem Copolymer von zwei oder mehreren davon und einem Gemisch von zwei oder mehreren davon. Besonders bevorzugt ist das Polymer ausgewählt aus der Gruppe, bestehend aus Naturkautschuk, Polyurethan, Polyvinylester, Polybutadien, einem Copolymer von zwei oder mehreren davon und einem Gemisch von zwei oder mehreren davon. Die zuvor genannten Bindemittel haben sich als besonders geeignet zur Bereitstellung eines biologisch abbaubaren Verbundmaterials herausgestellt. Besonders vorteilhaft an Polyurethan und/oder Polylactid ist, dass diese zu einem hohen Anteil, insbesondere von wenigstens 80 Gew.-% bezogen auf das Gesamtgewicht des Bindemittels, von nachwachsenden Ressourcen gewinnbar sind.

Als besonders bevorzugt hat es sich herausgestellt, ein biogenes Polymer zu verwenden. Besonders vorteilhaft an dem Einsatz von biogenen Bindemitteln ist, dass diese frei von chemischen Syntheseverfahren gewonnen werden können und somit bereits in ihrer Herstellung zur Umweltverträglichkeit des späteren Verbundmaterials beitragen. Als besonders bevorzugt hat sich die Auswahl eines biogenen Polymers aus der Gruppe bestehend aus Kautschuk, insbesondere Naturkautschuk, Zellulose und deren Derivate, Stärke und deren Derivate, einem Copolymer von zwei oder mehreren davon und einem Gemisch von zwei oder mehreren davon, herausgestellt.

Es hat sich herausgestellt, dass insbesondere der Einsatz von Styrol-Acrylat als Bindemittel die biologische Abbaubarkeit des Verbundmaterials deutlich beeinträchtigt. Insbesondere liegt Styrol-Acrylat in der Regel in feinverteilter Form im Verbundmaterial und nach der Zersetzung in Form von relativ kleinen Plastikpartikeln (Mikroplastik), insbesondere mit einem Äquivalenzdurchmesser von weniger als 0,1 mm, vor, die auf Grund der kleinen Partikelgröße nicht mit konventionellen Kompost-Siebanlagen ausgesiebt werden können und das Material somit nachhaltig kontaminieren. Insofern wurde festgestellt, dass bereits die Reduzierung des Styrol-Acrylat-Anteils gegenüber dem Stand der Technik zu einer Erhöhung der biologischen Abbaubarkeit des Verbundmaterials führt. Insofern hat es sich als vorteilhaft herausgestellt ein Styrol- und/oder Acrylat- freies Bindemittel einzusetzen.

Alternativ oder zusätzlich zum biologisch abbaubaren Anteil des Bindemittels kann vorgesehen sein, dass das Bindemittel ein Polymer ist, das mindestens 50 Gew.-%, 60 Gew.-%. 70 Gew.-%, 80 Gew.-%, 90 Gew.-%, 95 Gew.-% oder 99Gew.-% eines ethylenisch ungesättigten Monomers mit zumindest einer Carbonsäureestergruppe enthält. Es kann vorgesehen sein, dass das Bindemittel ein Polymer ist, das aus einem ethylenisch ungesättigten Monomer besteht.

Es kann vorgesehen sein, dass das Bindemittel ein Polyalkylacrylat, ein Polyalkyl(meth)acrylat, ein Polyurethan, ein Vinylacetat oder Copolymere oder Mischungen von aus zwei oder mehr davon ist. Es kann vorgesehen sein, dass das Bindemittel ein Polyalkylacrylat, ein Polyurethan oder Copolymere oder ein Gemisch aus zwei oder mehr davon ist. Es kann vorgesehen sein, dass das Bindemittel ein Polyalkylacrylat, insbesondere ein unvernetztes Polyalkylacrylat, ist.

Es kann vorgesehen sein, dass das Polyurethan ein Polyesterpolyurethan, insbesondere ein anionisches und/oder aliphatisches Polyesterpolyurethan, ein Polyetherpolyurethan oder ein Gemisch aus zwei oder mehreren davon ist. Es kann vorgesehen sein, dass das Bindemittel ein Copolymer eines Polyesterpolyurethans und eines Polyalkylacrylats, ein Copolymer eines Polyetherpolyurethans und eines Polyalkylacrylats, ein Copolymer eines Polyesterpolyurethans, eines Polyetherpolyurethans und eines Polyalkylacrylats, oder ein Gemisch aus zwei oder mehr davon ist.

Es kann vorgesehen sein, dass das Bindemittel Poly-C₁ bis C₁₂-Alkylacrylat ist. Es kann vorgesehen sein, dass das Bindemittel Poly-C₁ bis C₁₀-Alkylacrylat ist. Es kann vorgesehen sein, dass das Bindemittel Poly-C₁ bis C₈-Alkylacrylat ist. Es kann vorgesehen sein, dass das Bindemittel Poly-C₂ bis C₆-Alkylacrylat ist. Es kann vorgesehen sein, dass das Bindemittel Poly-C₃ bis C₅-Alkylacrylat ist. Es kann vorgesehen sein, dass das Bindemittel Poly-C₄ -Alkylacrylat (Polybutylacrylat) ist. Es kann vorgesehen sein, dass das Polybutylacrylat eine Glasübergangstemperatur Tg von - 50°C bis -5°C, vorzugsweise von -40°C bis -20°C, hat.

Es kann vorgesehen sein, dass das Bindemittel Methacrylat, Ethylacrylat, n-Butylacrylat, Isobutylacrylat, tert.-Butylacrylat, Hexylacrylat, 2-Ethylhexylacrylat und/oder Laurylacrylat enthält oder aus einem oder mehrerer derselben besteht.

Es kann vorgesehen sein, dass das Bindemittel ein anionisches Polyalkylacrylat umfasst oder aus diesem besteht, wobei das Polyalkylacrylat wie oben definiert ausgewählt sein kann, insbesondere das Bindemittel ein anionisches Polybutylacrylat umfasst oder ist.

Es kann vorgesehen sein, dass das Bindemittel eine Glasübergangstemperatur (Tg) ausgewählt aus der Gruppe, bestehend aus weniger als o°C, weniger als -5°C, weniger als -10°C, weniger als -15 °C, weniger als -20 °C, weniger als -25 °C, weniger als -28 °C, von -40°C bis -20°C, von -35°C bis -25°C, von -32 °C bis-28°C, beispielsweise etwa -30°C, jeweils bestimmt durch Dynamische Differenzkalorimetrie (DSC), hat. Es kann vorgesehen sein, dass das Bindemittel eine Viskosität von höchstens 200 mPa^{∗}s, beispielsweise von 20 bis 200 mPa^{∗}s nach ISO 1652, Brookfiled RVT Spindel 1/Umin 10/Faktor 5 hat.

Es kann vorgesehen sein, dass das Bindemittel ein spezifisches Gewicht von 1.00 bis 1.10 bei 25°C, insbesondere 1.02 bis 1.06 bei 15°C, beispielsweise etwa 1.04 °C hat.

Durch die im vorangehenden aufgeführten Bindemittel kann eine besonders vorteilhafte Formstabilität erreicht werden. Insbesondere kann gegenüber alternativen Bindemitteln, insbesondere gegenüber Styrol-Acrylat-basierten Bindemitteln, die Formstabilität des Verbundmaterials bei höheren Temperaturen verbessert werden.

Insbesondere beträgt der Anteil des zuvor beschriebenen Polymers, des biologisch abbaubaren Anteils und/oder des biogenen Anteils wenigstens 10 Gew.-%, 20 Gew.-%, 30 Gew.-%, 40 Gew.-%, 50 Gew.-%, 70 Gew.-%. 80 Gew.-%, 90 Gew.-%, 95 Gew.-%, oder 99 Gew.-%, bezogen auf das Gesamtgewicht des Bindemittels.

Erfindungsgemäß umfasst das Verbundmaterial ferner ein Flammschutzmittel. Als Flammschutzmittel werden im Allgemeinen Stoffe bezeichnet, welche die Ausbreitung von Bränden, also Feuer, Flammen, einer Glut, zumindest einschränken, insbesondere verlangsamen und/oder verhindern. Im Rahmen der vorliegenden Erfindung sei klar, dass das Flammschutzmittel in einer signifikanten Menge in dem Verbundmaterial vorliegen muss, damit die flammhemmende Wirkung erreicht wird. Das bloße Vorhandensein geringster Mengen beziehungsweise von Spurelementen von flammhemmenden Stoffen ist für das erfindungsgemäße Verbundmaterial nicht ausreichend, um eine Flammschutzwirkung zu erzielen. Das Beimischen eines Flammschutzmittels in ein gattungsgemäßes Verbundmaterial hat den Vorteil, dass das erfindungsgemäße Verbundmaterial eine Vielzahl neuer Einsatzmöglichkeiten erhält, beispielsweise um mit dem Verbundmaterial zu versehende Erzeugnisse oder Bauteile im Hinblick auf deren brandschutztechnische Anforderungen beispielsweise im Bau- und/oder Verkehrswesen sowie im Elektro- /Elektronik-Sektor zu erfüllen. Durch die Auswahl eines geeigneten Fasermaterials kann das erfindungsgemäße Verbundmaterial eine gewünschte Optik und/oder Haptik erreichen, wobei durch das Vorhandensein des Flammschutzmittels gleichzeitig dem Verbundmaterial eine flammhemmende Wirkung verliehen wird, die die Haptik und/oder Optik, welche das Verbundmaterial aufgrund des Fasermaterials erhält, nicht beeinträchtigt. Ferner hat sich herausgestellt, dass Flammschutzmittel dem Verbundmaterial ein gewünschtes Aussehen verleihen können. Beispielsweise kann Flammschutzmittel in Form von Blähgraphit ein Glitzern verursachen. Insbesondere in Ausführungsformen, bei denen das Flammschutzmittel an der Oberfläche des Verbundmaterials oder zumindest oberflächennah vorliegt oder das Verbundmaterial wenigstens teilweise transparent ist, kann der Einsatz von Blähgraphit zu einem glitzernden Verbundmaterial führen, was insbesondere Kaufanreize schafft und die Nachfrage nach Verbundmaterialien erhöht, in denen Fasermaterial, insbesondere Lederfasermaterial, wiederverwertet werden kann. Das Flammschutzmittel kann das Verbundmaterial im Wesentlichen durchsetzen und/oder homogen in dem Verbundmaterial verteilt sein. Insbesondere kann ein das Verbundmaterial umfassendes Erzeugnis ein Raumteiler sein, der von Flammschutzmittel durchsetzt ist, sodass das Flammschutzmittel an den dem Raum zugewandten Seiten des Raumteiles sichtbar ist, insbesondere an diesen ein Glitzern verursacht.

Erfindungsgemäß handelt es sich bei dem Brandschutzmittel um ein halogenfreies Brandschutzmittel.

Halogene sind die Elemente Fluor, Chlor, Brom, Iod und Astat. Ein Brandschutzmittel ist im Sinne der vorliegenden Offenbarung dann als halogenfrei anzusehen, wenn es im Wesentlichen keines dieser Elemente, insbesondere kein Fluor, Chlor, Brom oder Iod enthält. Das Brandschutzmittel enthält im Sinne der vorliegenden Offenbarung dann im Wesentlichen kein Halogen, wenn es dieses höchstens in Spuren enthält, d.h. höchstens in Mengen, die durch gebräuchliche Aufreinigungsschritte bei der Herstellung des Brandschutzmittels nicht vermieden werden können.

Die im Stand der Technik bekannten Verbundmaterialien mit Flammschutzmitteln begegnen erheblicher Skepsis bei potenziellen Kunden. Es wurde erkannt, dass dies damit zusammenhängt, dass bekannte Verbundmaterialien halogenhaltige Brandschutzmittel einsetzen. Halogenhaltige Flammschutzmittel bergen das Problem der Freisetzung toxischer Substanzen, beispielsweise von Dioxin, sind persistent und bioakkumulativ, weshalb sie als Sondermüll entsorgt werden müssen. Dadurch wird das Fasermaterial bereits nach einem Wiederverwertungszyklus mit bekannten Flammschutzmitteln zu nicht wiederverwertbarem Abfall, was das Entsorgungsproblem verschärft. Darüber hinaus setzen halogenhaltige Flammschutzmittel im Brandfall giftige Dämpfe frei, wodurch der Brandschutz zu einem hohen Preis erkauft wird.

Die Erfinder haben erkannt, dass dieses Problem durch den Einsatz von halogenfreien Flammschutzmitteln gelöst werden kann. Vorzugsweise sind wenigstens 10 Gew.-%, 20 Gew.-%, 30 Gew.-%, 40 Gew.-%, 50 Gew.-%, 60 Gew.-%, 70 Gew.-%. 80 Gew.-%, 90 Gew.-%, 95 Gew.-%, 99 Gew.-% oder 100 Gew.-% der in dem Verbundmaterial eingesetzten Flammschutzmittel halogenfrei. Besonders bevorzugt sind wenigstens 10 Gew.-%, 20 Gew.-%, 30 Gew.-%, 40 Gew.-%, 50 Gew.-%, 70 Gew.-%. 80 Gew.-%, 90 Gew.-%, 95 Gew.-%, 99 Gew.-% oder 100 Gew.-% der Bestandteile des Verbundmaterials halogenfrei.

Vorzugsweise ist das Flammschutzmittel ferner frei von Bor und/oder Antimon, insbesondere sind wenigstens 10 Gew.-%, 20 Gew.-%, 30 Gew.-%, 40 Gew.-%, 50 Gew.-%, 70 Gew.-%. 80 Gew.-%, 90 Gew.-%, 95 Gew.-%, 99 Gew.-% oder 100 Gew.-% der in dem Verbundmaterial eingesetzten Flammschutzmittel, frei von Bor und/oder Antimon. Besonders bevorzugt sind wenigstens10 Gew.-%, 20 Gew.-%, 30 Gew.-%, 40 Gew.-%, 50 Gew.-%, 70 Gew.-%. 80 Gew.-%, 90 Gew.-%, 95 Gew.-%, 99 Gew.-% oder 100 Gew.-% der Bestandteile des Verbundmaterials frei von Bor und/oder Antimon. Denn im Brandfall können beim Einsatz von halogenhaltigen, antimonhaltigen und/oder borhaltigen Flammschutzmitteln Dioxine entstehen, welche sowohl beim unbeabsichtigten Brand aber auch bei der Entsorgung mittels Verbrennung ein Gesundheitsrisiko, insbesondere Erstickungsrisiko, darstellen. Insbesondere geraten halogenhaltige, antimonhaltige und borhaltige Brandschutzmittel auf Grund der damit einhergehenden Umwelt- und Gesundheitsbelastungen immer stärker in die Kritik und werden von Nachhaltigkeitszertifikaten, wie Öko-Text, ausgeschlossen. Auch die Kontamination von für die Herstellung des Verbundmaterials eingesetzten Wassers durch den Einsatz von halogenhaltigen, antimonhaltigen und borhaltigen Brandschutzmitteln spricht gegen deren Einsatz. Insbesondere der Einsatz von Antimon wurde als besonders kritisch erkannt, weil Antimon, insbesondere beim Schleifen des Verbundmaterials über den dabei entstehenden giftigen Staub, in Kontakt mit Haut und Lunge von Personen gelangen kann.

Ein Brandschutzmittel ist im Sinne der vorliegenden Offenbarung dann als Bor- bzw. Antimon-frei anzusehen, wenn es im Wesentlichen keines dieser Elemente, enthält. Das Brandschutzmittel enthält im Sinne der vorliegenden Offenbarung dann im Wesentlichen kein Bor bzw. Antimon, wenn es dieses höchstens in Spuren enthält, d.h. höchstens in Mengen, die durch gebräuchliche Aufreinigungsschritte bei der Herstellung des Brandschutzmittels nicht vermieden werden können.

Als geeignete halogenfreie, und insbesondere borfreie und antimonfreie, Flammschutzmittel wurden insbesondere Blähgraphit, Aluminiumhydroxid, roter Phosphor, Magnesiumhydroxid, plättchenförmiges Silikat, insbesondere Vermiculit, Phosphat, insbesondere Aluminiumphosphat, Polyphosphat, insbesondere Aluminiumpolyphosphat oder Ammoniumpolyphosphat, oder Mischungen von zwei oder mehr davon identifiziert. Es hat sich herausgestellt, dass mit diesen Flammschutzmitteln Verbundmaterialien mit der Brandklasse B2 und mit einer gegenüber Verbundmaterialien ohne Flammschutzmittel um 50 bis 75 % verkürzten Nachglimmzeit bereitgestellt werden können.

Flammschutzmittel lassen sich im Allgemeinen nach deren Wirkungsweise in chemische und physikalische Prinzipien unterteilen, gemäß der vorliegenden Erfindung werden Flammschutzmittel eingesetzt, die durch einen oder mehrere chemische und/oder physikalische Prozesse den flammhemmenden Wirkungseffekt erzeugen. Beispielsweise handelt es sich bei dem Flammschutzmittel um ein additives Flammschutzmittel, das auch als Brandhemmer bezeichnet werden kann, ein reaktives Flammschutzmittel, ein inhärentes Flammschutzmittel oder ein sogenannter Coating, der als Beschichtung von außen nach Wirkungsweise eines Brandhemmers aufgebracht wird.

Vorzugsweise ist das Flammschutzmittel ausgewählt aus der Gruppe bestehend aus Blähgraphit, Aluminiumhydroxid, roter Phosphor, Magnesiumhydroxid, plättchenförmiges Silikat, insbesondere Vermiculit, ein Phosphat, insbesondere Aluminiumphosphat, ein Polyphosphat, insbesondere Aluminiumpolyphosphat oder Ammoniumpolyphosphat, oder Mischung von zwei oder mehr davon. Besonders bevorzugt bestehen die in dem Verbundmaterial ausgewählten Flammschutzmittel zu wenigstens 10 Gew.-%, 20 Gew.-%, 30 Gew.-%, 40 Gew.-%, 50 Gew.-%, 70 Gew.-%. 80 Gew.-%, 90 Gew.-%, 95 Gew.-%, 99 Gew.-% oder 100 Gew.-% aus Blähgraphit, Aluminiumhydroxid, Roter Phosphor, Magnesiumhydroxid, plättchenförmiges Silikat, insbesondere Vermiculit, ein Phosphat, insbesondere Aluminiumphosphat, ein Polyphosphat, insbesondere Aluminiumpolyphosphat oder Ammoniumpolyphosphat, oder Mischung von zwei oder mehr davon. Besonders vorteilhaft an den zuvor genannten Flammschutzmitteln ist, dass diese frei von Halogen, Antimon und Bor sind. Die Erfinder haben überraschenderweise festgestellt, dass mit derartigen Flammschutzmitteln Verbundmaterialien mit der Brandklasse B2 gemäß DIN 4102 und mit der Brandklasse E gemäß DIN EN 13501-1 sowie mit gegenüber Verbundmaterialien ohne Flammschutzmittel um 50 bis 75 % verkürzte Nachglimmzeiten erzielt werden können. Erste Versuche deuten sogar deren Eignung zur Bereitstellung von Verbundmaterialien mit Brandschutzklasse B1 gemäß DIN 4102 an. Wie weiter unten gezeigt weisen die Verbundmaterialien dabei zusätzlich gewünschte mechanische Eigenschaften, insbesondere hinsichtlich Biegsamkeit und Wasserdampfspeicherfähigkeit, auf und ermöglichen insbesondere das Aufwickeln von flächigen Erzeugnissen aus dem Verbundmaterial auf Rollen mit relativ kleinen Durchmessern.

Darüber hinaus besteht ein Vorteil in dem Einsatz von Blähgraphit, Phosphat und rotem Phosphor als Flammschutzmittel darin, dass diese intumeszent sind, insbesondere im Brandfall eine Intumeszenzschicht bilden. Alternativ oder zusätzlich zu den zuvor genannten Brandschutzmitteln kann das halogenfreie Flammschutzmittel ein intumeszentes Brandschutzmittel aufweisen, insbesondere daraus bestehen, insbesondere ausgewählt aus Blähgraphit, Phosphat und Roter Phosphor. Diese Flammschutzmittel blähen im Brandfall auf und entziehen der Flamme dadurch Energie. Darüber hinaus bilden die Brandschutzmittel dabei eine Schutzschicht, die das Material zu einem gewissen Grad von der Flamme abschirmt und zum Beispiel Sauerstoff von der Brandoberfläche abschirmt.

Ein weiterer Vorteil von Phosphat und rotem Phosphor als Flammschutzmittel ist, dass diese als Säurespender dienen, die Synergisten (sogenannte Blower), wie Melamin, aktivieren können. Diese Synergisten verstärken zum einen die Intumeszenz. Zum anderen werden inerte Gase wie z.B. Stickstoff frei, die die beim Brand entstehenden brennenden Gase verdünnen. Insofern hat es sich als besonders bevorzugt herausgestellt, dass das Verbundmaterial, insbesondere beim Einsatz von Phosphat und/oder Roter Phosphor als Flammschutzmittel, Synergisten, insbesondere Melamin (2,4,6-Triamino-s-triazin), aufweist.

Ein Vorteil von anorganischen Hydroxiden als Brandschutzmittel, wie Aluminiumhydroxid und Magnesiumhydroxid, ist, dass diese durch Wasserabspaltung kühlen. Alternativ oder zusätzlich zu den zuvor genannten Brandschutzmitteln kann das halogenfreie Flammschutzmittel ein anorganisches Hydroxid als Brandschutzmittel aufweisen.

Alternativ oder zusätzlich umfasst das Flammschutzmittel ein anorganisches Flammschutzmittel, wie Aluminiumhydroxid, Roter Phosphor, Magnesiumhydroxid und/oder plättchenförmiges Silikat.

Vorzugsweise umfasst das Verbundmaterial das Flammschutzmittel in einer Menge von höchstens 50 Gew.-%, insbesondere im Bereich von wenigstens 1 Gew.-% bis 50 Gew.-%, vorzugsweise im Bereich 2 bis 40 Gew.-% oder 3 bis 30 Gew.-%, besonders bevorzugt im Bereich von 3 Gew.-% bis 25 Gew.-% oder von 5 Gew.-% bis 25 Gew.-%, bezogen auf das Gesamtgewicht des Verbundmaterials.

Vorzugsweise umfasst das Flammschutzmittel Blähgraphit, insbesondere besteht es daraus. Dabei kann das Blähgraphit in einer Menge von höchstens 20 Gew.-%, insbesondere im Bereich von 1 Gew.-% und 20 Gew.-%, vorzugsweise von 2 Gew.-% bis 20 Gew.-%, besonders bevorzugt im Bereich von 3 Gew.-% bis 20 Gew.-%, 5 Gew.-% bis 20 Gew.-%, 7,5 Gew.-% bis 20 Gew.-%, 10 Gew.-% bis 20 Gew.-% oder 15 Gew.-% bis 20 Gew.-%, bezogen auf das Gesamtgewicht des Verbundmaterials, in dem Verbundmaterial enthalten sein. Es hat sich herausgestellt, dass die Brandklasse B2 mit wenigstens 3 Gew.-% Blähgraphit noch erreichbar ist. Sicherer wird Sie jedoch mit wenigstens 5 Gew.-%, bevorzugt wenigstens 7,5 Gew.-%, Blähgraphit erreicht. Insofern kann insbesondere bei Ausführungsformen, bei denen die Brandklasse B2 ausreichend ist, ein Gewichtsanteil zwischen 3 Gew.-% und 15 Gew.-%, vorzugsweise zwischen 5 Gew.-% und 15 Gew.-%, besonders bevorzugt zwischen 7,5 Gew.-% und 15 Gew.-%, zielführend sein. Erste Versuche haben gezeigt, dass durch Erhöhung des Anteils an Blähgraphit auf wenigstens 15 Gew.-% sogar die Brandklasse B1 erreichbar scheint. Insofern kann für Ausführungsformen mit entsprechenden Anforderungen an die Brandkasse ein Anteil von Blähgraphit zwischen 15 Gew.-% und 30 Gew.-%, insbesondere zwischen 15 Gew.-% und 20 Gew.-%, vorteilhaft sein.

Vorzugsweise weist der Blähgraphit wenigstens 90 Gew.-% Kohlenstoff, bezogen auf das Gesamtgewicht des Blähgraphits, auf. Alternativ oder zusätzlich kann es eine Expansion von wenigstens 20 cm³/g, 40 cm³/g, 60 cm³/g, 80 cm³/g, 100 cm³/g, 150 cm³/g, 200 cm³/g, vorzugsweise von wenigstens 250 cm³/g, aufweisen. Alternativ oder zusätzlich kann es eine Partikelgrößenverteilung aufweisen, in der wenigstens 20%, 25 %, 40 %, 50%, 60% oder 70%, vorzugsweise 80%, der Partikel einen Partikeldurchmesser von mehr als 75 µm, 150 µm, 200 µm oder 250 µm, vorzugsweise von mehr als 300 µm, haben. Die Erfinder haben erkannt, dass Blähgraphit besonders gut geeignet ist, um die Nachglimmzeit des Verbundmaterials zu reduzieren. Insbesondere wurde erkannt, dass durch den Einsatz von Blähgraphit als einzigem Brandschutzmittel im Kleinbrennertest, insbesondere gemäß an DIN 4102, die Brandschutzklasse B2 erreicht wird, Voraussetzungen für Brandschutzklasse B1 erreicht werden und eine Verkürzung der Nachglimmzeit um 50 % gegenüber Verbundmaterialien ohne Flammschutzmittel erreicht wird.

Alternativ oder zusätzlich umfasst das Flammschutzmittel Aluminium- und/oder Magnesiumhydroxid, vorzugsweise besteht es aus Aluminium- und/oder Magnesiumhydroxid. Dabei kann das Aluminium- und/oder Magnesiumhydroxid in einer Menge von höchstens 50 Gew.-%, insbesondere im Bereich von 5 Gew.-% und 50 Gew.-%, vorzugsweise von 10 Gew.-% bis 40 Gew.-%, noch bevorzugter zwischen 15 Gew.-% und 40 Gew.-%, besonders bevorzugt im Bereich zwischen 20 Gew.-% und 30 Gew.-% oder zwischen 23 Gew.-% und 35 Gew.-%, bezogen auf das Gesamtgewicht des Verbundmaterials, in dem Verbundmaterial enthalten sein. Es hat sich herausgestellt, dass die Brandklasse B2 mit wenigstens 10 Gew.-% Aluminiumhydroxid noch erreichbar ist. Sicherer wird Sie jedoch mit wenigstens 15 Gew.-%, bevorzugt wenigstens 20 Gew.-%, Aluminiumhydroxid erreicht. Vorzugsweise umfasst das Flammschutzmittel Aluminiumhydroxid, dessen mittlere Partikelgröße D50 im Bereich von 1 µm bis 50 µm, insbesondere bis 40 µm, 30 µm, 20 µm oder 10 µm, insbesondere im Bereich von 1,5 bis 10 µm, liegt.

Alternativ oder zusätzlich umfasst das Flammschutzmittel roten Phosphor, insbesondere besteht es aus rotem Phosphor. Dabei kann der rote Phosphor in einer Menge von höchstens 15 Gew.-%, insbesondere im Bereich von 0,5 Gew.-% bis 15 Gew.-%, vorzugsweise von 1 Gew.-% bis 10 Gew.-%, besonders bevorzugt im Bereich 1,5 Gew.-% bis 5 Gew.-%, 2,0 Gew.-% bis 5 Gew.-% oder 2,5 Gew.-% bis 5 Gew.%., bezogen auf das Gesamtgewicht des Verbundmaterials, in dem Verbundmaterial enthalten sein. Es hat sich herausgestellt, dass die Brandklasse B2 mit wenigstens 1 Gew.-% Rotem Phosphor noch erreichbar ist. Sicherer wird Sie jedoch mit wenigstens 2 Gew.-% Rotem Phosphor erreicht.

Vorzugsweise weist das Flammschutzmittel eine Kombination von wenigstens zwei Flammschutzmitteln auf. Vorzugsweise sind die wenigstens zwei Flammschutzmittel in Art und/oder Menge wie zuvor beschrieben ausgewählt, insbesondere ausgewählt aus der Gruppe bestehend aus Blähgraphit, Aluminiumhydroxid, rotem Phosphor, Magnesiumhydroxid, einem Polyphosphat und einem Polyphosphat, besonders bevorzugt in den entsprechend angegebenen Mengenangaben. Noch bevorzugter umfasst das Flammschutzmittel eine Kombination aus Blähgraphit mit wenigstens einem weiteren Flammschutzmittel, insbesondere ausgewählt aus der Gruppe bestehend aus Aluminiumhydroxid, rotem Phosphor, Magnesiumhydroxid, einem Phosphat und einem Polyphosphat. Die Erfinder haben erkannt, dass durch die Kombination von verschiedenen Flammschutzmitteln, im Vergleich zum Einsatz von lediglich einem Flammschutzmittel, eine stärkere Verkürzung der Nachglimmzeit und eine höhere Brandschutzklasse erreicht werden kann und/oder eine gewünschte Nachglimmzeit und Brandschutzklasse bei einer geringeren Menge an Flammschutzmitteln erreicht werden kann. Als besonders bevorzugt wurde die Kombination aus Blähgraphit mit rotem Phosphor und/oder Aluminiumhydroxid erkannt. Insbesondere konnte mit derartigen Kombinationen eine Verkürzung der Nachglimmzeit gegenüber Verbundmaterialien ohne Flammschutzmittel von 75 Gew.-% erzielt werden.

In einer Ausführungsform weist das Flammschutzmittel die Kombination von Blähgraphit und Roter Phosphor in einer Menge zwischen 2 Gew.-% und 15 Gew.-%, vorzugsweise zwischen 3,5 und 10 Gew.-%, besonders bevorzugt zwischen 5 Gew.-% und 8 Gew.-%, bezogen auf das Gesamtgewicht des Verbundmaterials, auf. Die Erfinder haben insbesondere erkannt, dass ein Mindestanteil von 3,5 Gew.-% der Kombination zu einer Reduzierung der Nachglimmzeit von 50 % gegenüber einem Verbundmaterial ohne Flammschutzmittel führen kann. Durch Steigerung des Mengenanteils auf mindestens 4,8 Gew.-% konnte die Nachglimmzeit weiter verkürzt werden. Bei einem Mengenanteil von 6,8 Gew.-% konnte eine Verkürzung der Nachglimmzeit um 75 % gegenüber einem Verbundmaterial ohne Flammschutzmittel identifiziert werden. Als besonders geeignete Gewichtsverhältnisse von Blähgraphit zu Roter Phosphor haben sich dabei insbesondere Verhältnisse zwischen 4:1 und 1:2, vorzugsweise zwischen 3:1 und 1:2, besonders bevorzugt zwischen 2,5:1 und 1:1,5 oder zwischen 2:1 und 1:1, herausgestellt. Besonders gute Ergebnisse wurden beispielsweise mit 4,5 Gew.-% Blähgraphit und 2,3 Gew.-% Roter Phosphor, bezogen auf das Gesamtgewicht des Verbundmaterials, erzielt. Ein signifikanter Effekt auf die Nachglimmzeit konnte auch noch bei 2,4 Gew.-% Blähgraphit und 2,4 Gew.-% Roter Phosphor beobachtet werden. Bei 2,4 Gew.-% Blähgraphit und 1,2 Gew.-% Rotem Phosphor nimmt die Nachglimmzeit wieder etwas zu. Jedoch konnte auch bei dieser Ausführung noch eine Reduzierung der Nachglimmzeit von 50 % gegenüber einem Verbundmaterial ohne Flammschutzmittel beobachtet werden. Versuche haben außerdem gezeigt, dass insbesondere die Voraussetzungen für Brandklasse B1 sicherer durch die Kombination von Flammschutzmitteln erfüllt werden kann. Anstelle von 15 Gew.-% Flammschutzmittel in Form von 100 % Blähgraphit, mit dem die Voraussetzungen gerade noch erreichbar sind, können diese durch die Kombination von Flammschutzmitteln bei einem Gesamtgewichtsanteil von 5 Gew.-% noch sicher erreicht werden. Beispielsweise können die Voraussetzungen für Brandklasse B1 mit 2,4 Gew.-% Blähgraphit und 2,4 Gew.-% Roter Phosphor, jeweils bezogen auf das Gesamtgewicht des Verbundmaterials, noch sicher erreicht werden. Als Grenzwert für die Erreichbarkeit von Flammschutzklasse B1 hat sich bei der Kombination von Flammschutzmitteln insbesondere ein Gesamtgewichtsanteil von wenigstens 3,5 Gew.-% herausgestellt, beispielsweise von 2,4 Gew.-% Blähgraphit und 1,2 Gew.-% Roter Phosphor oder von 1,2 Gew.-% Blähgraphit und 2,4 Gew.-% Roter Phosphor.

In einer alternativen Ausführungsform weist das Flammschutzmittel die Kombination von Blähgraphit und Aluminiumhydroxid in einer Menge zwischen 10 Gew.-% und 50 Gew.-%, vorzugsweise zwischen 15 und 35 Gew.-%, oder 20 und 35 Gew.-%, besonders bevorzugt zwischen 20 und 30 Gew.-% oder zwischen 23 und 35 Gew.-%, bezogen auf das Gesamtgewicht des Verbundmaterials, auf. Die Erfinder haben insbesondere erkannt, dass ein Mindestanteil von 20 Gew.-% der Kombination zu einer Reduzierung der Nachglimmzeit von 50 % gegenüber einem Verbundmaterial ohne Flammschutzmittel führen kann. Durch Steigerung des Mengenanteils auf mindestens 23 Gew.-% konnte die Nachglimmzeit weiter verkürzt werden. Als besonders geeignete Gewichtsverhältnisse von Blähgraphit zu Aluminiumhydroxid haben sich dabei insbesondere Verhältnisse zwischen 1:1 und 1:15, vorzugsweise zwischen 1:1,5 und 1:10, besonders bevorzugt zwischen 1:2 und 1:8, zwischen 1:2 und 1:5, zwischen 1:2 und 1:3 oder zwischen 1:2,3 und 1:2,8, herausgestellt. Eine besonders starke Reduzierung der Nachglimmzeit von 75% gegenüber Verbundmaterialien ohne Flammschutzmittel und die Voraussetzungen für Brandklasse B1 wurden beispielsweise mit 7 Gew.-% Blähgraphit und 17,5 Gew.-% Aluminiumhydroxid, bezogen auf das Gesamtgewicht des Verbundmaterials, erzielt. Bei 3,7 Gew.-% Blähgraphit und 18,3 Gew.-% Aluminiumhydroxid nimmt die Nachglimmzeit wieder etwas zu. Jedoch konnte auch bei dieser Ausführung noch eine Reduzierung der Nachglimmzeit von 50 % gegenüber einem Verbundmaterial ohne Flammschutzmittel beobachtet werden. Bei 3 Gew.-% Blähgraphit und 29,7 Gew.-% Aluminiumhydroxid wurden die Voraussetzungen für Brandkasse B1 immer noch sicher erfüllt. Als Grenzwertig für die Voraussetzungen der Brandklasse B1 wurden Anteile von Blähgraphit zwischen 5,5 Gew.-% und 7,7 Gew.-% und von Aluminiumhydroxid zwischen 11 Gew.-%bis 15 Gew.-% identifiziert. In anderen Worten hat sich insbesondere bei hohen Anforderungen an den Brandschutz, insbesondere gemäß Brandklasse B1 und/oder an eine Reduzierung der Nachglimmzeit um 75 %, ein Mengenanteil der Kombination von Blähgraphit und Aluminiumhydroxid zwischen 23 Gew.-% und 35 Gew.-% als vorteilhaft herausgestellt. Bei etwas geringeren Anforderungen, insbesondere gemäß Brandschutzklasse B2 und/oder an eine Reduzierung der Nachglimmzeit um 50 Gew.-%, hat sich ein Mengenanteil der Kombination von Blähgraphit und Aluminiumhydroxid in einem Mengenanteil zwischen 15 Gew.-% und 30 Gew.-%, insbesondere zwischen 20 Gew.-% und 30 Gew.-%, als vorteilhaft herausgestellt.

In einer alternativen Ausführungsform weist das Flammschutzmittel eine Dreierkombination aus Blähgraphit, Roter Phosphor und Aluminiumhydroxid auf. Für derartige Ausführungsformen konnten ähnliche Ergebnisse, wie für die oben angeführten Zweierkombinationen erzielt werden.

Es kann vorgesehen sein, dass das Verbundmaterial das Fasermaterial in einer Menge von wenigstens 20 Gew.-%, 30 Gew.-%, 35 Gew.-%, 40% Gew.-%, 45 Gew.-% oder 50 Gew.-% und/oder höchstens 80 Gew.-%, 75 Gew.-%, 70 Gew.-%, 65 Gew.-%, 60 Gew.-%, 55 Gew.-% oder 50 Gew.-% aufweist. Insbesondere kann der Anteil des Fasermaterials 20 bis 80 Gew.-% vorzugsweise 25 bis 70 Gew.-%, besonders bevorzugt 30 bis 60 Gew.-% oder 30 bis 50 Gew.-%, bezogen auf das Gesamtgewicht des Verbundmaterials, aufweisen.

Insbesondere wurde erkannt, dass ein Anteil des Fasermaterials von wenigstens 20 Gew.-%, vorzugsweise wenigstens 25 Gew.-%, besonders bevorzugt wenigstens 30 Gew.-%, 35 Gew.-% oder 40 Gew.-%, bezogen auf das Gesamtgewicht des Verbundmaterials, vorteilhaft ist, insbesondere um dem Verbundmaterial eine ausreichende Flexibilität und Festigkeit zu verleihen. Als besonders bevorzugt wurde ein Anteil des Fasermaterials von wenigstens 30 Gew.-%, bezogen auf das Gesamtgewicht des Verbundmaterials erkannt, da dieser dem Verbundmaterial für im Wesentlichen alle der untenstehenden Anwendungsgebiete die nötige Flexibilität und/oder Festigkeit verleiht.

Vorzugsweise umfasst das Fasermaterial organisches Fasermaterial, ausgewählt aus der Gruppe bestehend aus Pflanzenfasermaterial, wie Samenfasermaterial, insbesondere Baumwolle und/oder Kapok, Bastfasermaterial, insbesondere Hanf, Flachs, Jute, Sunn, Kenaf, Urena, Rosella, Ramie und/oder Nessel, Hartfasermaterial, insbesondere Sisal, Hennequen, Abaka, Fique, Ananas und/oder Banane, und/oder Fruchtfasermaterial, insbesondere Kokos, und/oder Tierfasermaterial, wie Lederfasermaterial, Wollfasermaterial und/oder Seidenfasermaterial, insbesondere zu einem Anteil von wenigstens 10 Gew.-%, 20 Gew.-%, 30 Gew.-%, 40 Gew.-%, 50 Gew.-%, 70 Gew.-%. 80 Gew.-%, 90 Gew.-%, 95 Gew.-%, 99 Gew.-% oder 100 Gew.-%, bezogen auf das Gesamtgewicht des Fasermaterials. Besonders bevorzugt wird das Fasermaterial ausgewählt aus der Gruppe bestehend aus aus Produktionsrückständen und/oder Sekundärrohstoffen gewonnenes Fasermaterial, Baumwollfasermaterial, Papierfasermaterial, Holzfasermaterial, insbesondere Papierfasermaterial, Fasermaterial der Ordnung Poales, Lederfasermaterial oder Mischungen von zwei oder mehr davon umfasst, insbesondere besteht daraus.

In einer Ausführungsform beträgt der Anteil des Lederfasermaterials wenigstens 10 Gew.-%, 20 Gew.-%, 30 Gew.-%, 40 Gew.-%, 50 Gew.-%, 70 Gew.-%. 80 Gew.-%, 90 Gew.-%, 95 Gew.-%, 99 Gew.-% oder 100 Gew.-%, bezogen auf das Gesamtgewicht des Fasermaterials. Es hat sich herausgestellt, dass Lederfasermaterial auf Grund des darin enthaltenen Fettgehalts sehr brennbar ist. Darüber hinaus wird wie folgend und zuvor beschrieben Lederfasermaterial bevorzugt mit Fettungsmitteln und Bindemitteln in Form von Naturlatex kombiniert, was die Brennbarkeit des Verbundwerkstoffs abermals erhöht. Insofern besteht insbesondere beim Einsatz von Lederfasern, aber auch beim Einsatz von Pflanzenfasern in Verbindung mit Fettungsmitteln und/oder Naturlatex als Bindemittel, ein erhöhter Bedarf nach Flammschutzmitteln.

Es kann vorgesehen sein, dass das Fasermaterial Lederfasern umfasst oder aus diesen besteht. Beispielsweise können die Lederfasern zerkleinertes Leder und Falzspäne umfassen. Insbesondere können Lederfasern verwendet werden, die bei der Vorgerbung (wet blue, wet white, usw.), dem Crust oder fertigem Leder bei den typischen Arbeitsgängen, insbesondere Falzen, Beschneiden, Spalten, Schleifen, Stanzen, anfallen. Beispielsweise können die Lederfasern von Stanzresten gegerbter Leder, Chromfalzspänen oder Aldehydfalzspänen stammen und/oder beispielsweise auch aus Lederfaserstoffschleifstaub gewonnen werden.

Es kann vorgesehen sein, dass das Lederfasermaterial ausgewählt ist aus der Gruppe bestehend aus Aldehydfalzspänen, Chromfalzspänen und Leder (Lederresten), insbesondere Resten (= Produktionsrückständen) vorgegerbter Häute und/oder Resten von Crust und/oder Resten ausgegerbter Leder und/oder Resten zugerichteter Leder, insbesondere zu wenigstens 10 Gew.-%, 20 Gew.-%, 30 Gew.-%, 40 Gew.-%, 50 Gew.-%, 60 Gew.-%, 70 Gew.-%. 80 Gew.-%, 90 Gew.-%, 95 Gew.-%, 99 Gew.-% oder 100 Gew.-% daraus besteht. Beispielsweise kann das Lederfasermaterial zu wenigstens 10 Gew.-%, 20 Gew.-%, 30 Gew.-%, 40 Gew.-%, 50 Gew.-%, 70 Gew.-%. 80 Gew.-%, 90 Gew.-%, 95 Gew.-%, 99 Gew.-% oder 100 Gew.-% aus diesen bestehen. Es kann aber auch vorgesehen sein, dass das Lederfasermaterial eine Mischung von wenigstens zwei Lederfasermaterialien aufweist, insbesondere ausgewählt aus Leder (Lederresten), Aldehydfalzspäne und Chromfalzspäne. Es kann ferner vorgesehen sein, dass das Lederfasermaterial eine Mischung von drei Lederfasermaterialien aufweist, insbesondere ausgewählt aus Leder (Lederresten), Aldehydfalzspäne und Chromfalzspäne. Insbesondere kann das Lederfasermaterial zwischen 15 und 40 Gew.-%, insbesondere zwischen 20 und 30 Gew.-%, Chromfalzspäne und zwischen 3 und 20 Gew.-%, insbesondere zwischen 8 und 13 Gew.-%, Leder (Lederreste), jeweils bezogen auf das Gesamtgewicht des Verbundmaterials, aufweisen. Alternativ oder zusätzlich zum Leder (Lederresten) kann das Lederfasermaterial zwischen 1 und 10 Gew.-%, insbesondere zwischen 2 und 7 Gew.-%, Aldehydfalzspäne aufweisen. Beispielsweise kann das Lederfasermaterial etwa 25 Gew.-% Chromfalzspäne, 10 Gew.-% Leder und 4 Gew.-% Aldehydfalzspäne aufweisen. Ferner kann vorgesehen sein, dass das Verbundmaterial Lederfaserstoffschleifstaub aufweist. Insbesondere kann das Verbundmaterial Lederfaserstoffschleifstaub zu einem Anteil von höchstens 10 Gew-%, vorzugsweise höchstens 5 Gew.-%, besonders bevorzugt höchstens 3 Gew.-%, und/oder von wenigstens 0,5 Gew.-%, vorzugsweise wenigstens 1,0 Gew.-% besonders bevorzugt 1 wenigstens, 5 Gew.-% oder 2,0 Gew.-%, bezogen auf das Gesamtgewicht des Verbundmaterials, aufweisen. Es hat sich herausgestellt, dass mit den zuvor beschriebenen Anteilen von Leder (Lederresten), Aldehydfalzspäne, Chromfalzspäne und/oder Lederfaserstoffschleifstaub Verbundmaterialien hergestellt werden können, deren mechanische Eigenschaften für die folgend beschriebenen Zwecke ausreichend sind. Dadurch konnte ein Verbundmaterial geschaffen werden, das für eine Vielzahl von Anwendungsgebieten geeignet ist und somit das Entsorgungsproblem von Lederfasermaterialien zumindest zum Teil gelöst werden. Besonders bevorzugt an der Verwendung der zuvor beschriebenen Lederfaserarten, ist, dass diese auf Grund ihrer kurzen Partikelgröße, beispielsweise bei Lederfaserstoffschleifstaub, und/oder ihrer Kontaminierung mit Fremdsubstanzen, beispielsweise bei Chromfalzspänen, vor der vorliegenden Erfindung als besonders minderwertige Materialien angesehen wurden, die nur sehr beschränkt Wiederverwertungsmöglichkeiten fanden.

Vorzugsweise liegt ein Hauptfaseranteil von wenigstens 40 Vol.-% des Fasermaterials in einem Faserlängenbereich zwischen 0,2 mm und 2 mm. Vorzugsweise umfasst der Hauptfaseranteil wenigstens 45 Vol.-%, 55 Vol.-%, 60 Vol.-%, 65 Vol.-% oder 70 Vol.-% des Fasermaterials. Insbesondere umfasst der Hauptfaseranteil zwischen 40 Vol.-% und 100 Vol.-%, vorzugsweise zwischen 55 Vol.-% und 85 Vol.-%, besonders bevorzugt zwischen 65 Vol.-% und 75 Vol.-%, insbesondere etwa 70 Vol.-%, des Fasermaterials. Es hat sich herausgestellt, dass eine Faserlänge von mindestens 0,2 mm zu den oben genannten Gewichtsprozentangaben dem Verbundmaterial die nötige Festigkeit verleiht, um es für die nachfolgend beschriebenen Einsatzzwecke zu verwenden. Insbesondere kann durch den Hauptanteil von Fasern mit einer Mindestfaserlänge von 0,2 mm eine ausreichende Verhakung des Fasermaterials erzielt werden, um dem Verbundmaterial eine ausreichende Festigkeit und Flexibilität zur Verarbeitung in den nachfolgend beschriebenen Einsatzgebieten zu verleihen. Gleichzeitig ermöglicht die Mindestfaserlänge von 0,2 mm den Bindemittelanteil, bezogen auf das Gesamtgewicht des Verbundmaterials, möglichst gering zu halten, insbesondere unterhalb von 50 Gew.-%, 45 Gew.-%, 40 Gew.-%, 35 Gew.-%, 30 Gew.-% oder 25 Gew.-%, zu halten und somit einen höheren Anteil von CO₂ speicherndem Fasermaterialien in dem Verbundmaterial zu verwenden.

Insbesondere weist der Hauptfaseranteil einen unteren Hauptfaseranteil mit einem Faserlängenbereich zwischen 0,2 mm und 1,0 mm und einen oberen Hauptfaseranteil mit einem Faserlängenbereich zwischen mehr als 1,0 mm und 2,0 mm auf. Insbesondere liegt der untere Hauptfaseranteil zu wenigstens 40 Vol.-%, 50 Vol.-%, 60 Vol.-% oder 65 Vol.-% des Hauptfaseranteils vor und/oder der obere Hauptfaseranteil zu wenigstens 5 Vol.-%, 10 Vol.-%, 20 Vol.-%, 25 Vol.-%, 30% Vol.-% oder 35 Vol.-% des Hauptfaseranteils vor. Insbesondere beträgt das Volumenverhältnis von unterem Hauptfaseranteil zu oberen Hauptfaseranteil zwischen 1:1 und 3:1, vorzugsweise zwischen 1,3:1 und 2,3:1, besonders bevorzugt zwischen 1,5:1 und 2,0:1. Beispielsweise kann der untere Hauptfaseranteil zu 45 Vol.-% des Fasermaterials und der obere Hauptfaseranteil zu 25 Vol.-% des Fasermaterials vorliegen.

Bezüglich der oberen Grenze des Hauptfaseranteils hat sich herausgestellt, dass Fasern mit dieser Länge nahezu keine Weiterverwendungsmöglichkeit in bekannten Recyclingprodukten finden. Insbesondere für die Papierherstellung und die Garnherstellung sind in der Regel längere Fasern, für Letztere insbesondere mit einer Länge von mehr als 25 mm, erforderlich. Daher konnten insbesondere Kämmlinge, Grundbaumwolle, Kardenrückständen, Schlichtfasern, Reißfasern, Papierfasermaterial und/oder Spelzfasermaterial in dem Faserlängenbereich des Hauptfaseranteils vor der vorliegenden Erfindung kaum wiederverwendet werden. Insofern erschließt die vorliegende Erfindung einen gänzlich neuen Anwendungsbereich für Fasermaterialien, die zuvor den nicht wiederverwertbaren Rückständen zugeführt und kompostiert werden mussten. Insbesondere können deutlich höherwertige Einsatzgebiete für derartige Faserlängenbereiche zwischen 0,2 mm und 2,0 mm erzielt werden als die bisher bekannten, die sich insbesondere auf kurzlebige Produkte wie Putzwolle und Malervlies beschränken.

Insbesondere hat sich eine Mindestfaserlänge von 0,2 mm als vorteilhaft für die erforderliche Verzweigung der Fasern zu einem Faservlies herausgestellt. Es hat sich jedoch auch gezeigt, dass zu lange Fasern dazu neigen Faserklumpen zu bilden, die der Bildung eines homogenen Faservlieses entgegenstehen. In der Papierindustrie wird das Problem der Faserklumpen durch einen sehr dünnflüssigen Faserbrei mit einem Gewichtsverhältnis von Fasermaterial zu Wasser von etwa 1 zu 1000 gelöst. Dies führt zu einem hohen Wasserverbrauch. Auch der zum Trocknen erforderliche Energiebedarf ist auf Grund des hohen Wassergehalts unbefriedigend hoch. Es hat sich herausgestellt, dass durch einen hohen Faseranteil von Fasern mit einer maximalen Faserlänge von maximal 5 mm Verklumpungen mit deutlich geringeren Wassermengen, insbesondere mit einem Gewichtsverhältnis von Fasermaterial zu Wasser zwischen 50 zu 1000 und 100 zu 1000, vermieden werden können. Dadurch kann der Wasserverbrauch um den Faktor 50 bis 100 und damit auch die für das Trocknen erforderliche Energie reduziert werden. Demnach hat es sich als bevorzugt herausgestellt, dass das Verbundmaterial wenigstens 40 Vol.-%, besonders bevorzugt wenigstens 50 Vol.-%, 60 Vol.-%, 70 Vol.-%,80 Vol.-% oder 90 Vol.-%, noch bevorzugter wenigstens 92 Vol.-%, 94 Vol.-%, 96 Vol.-%, 98 Vol.-%, 99 Vol.-%, 99,5 Vol.-%, 99,7 Vol.-%, 99,9 Vol.-% oder 100 Vol.-% an Fasern mit einer Faserlänge von maximal 5 mm aufweist.

Es hat sich ferner als bevorzugt herausgestellt, dass ein Kurzfaseranteil von wenigstens 5 Vol.%, insbesondere von wenigstens 10 Vol.-%, 15 Vol.-% 20 Vol.-% oder 25 Vol.-%, des Fasermaterials eine Faserlänge von weniger als 0,2 mm aufweist, insbesondere in einem Faserlängenbereich zwischen 0,02 mm und weniger als 0,2 mm liegt. Vorzugsweise beträgt der Kurzfaseranteil höchstens 40 Vol.-%, höchstens 35 Vol.-%, 30 Vol.-% oder 25 Vol.-%, des Fasermaterials. Vorzugsweise weist das Fasermaterial den Kurzfaseranteil zu wenigstens 5 Vol.-% und höchstens 40 Vol.-%, besonders bevorzugt zwischen 10 Vol.-% und 35 Vol.-%, noch bevorzugter zwischen 20 Vol.-% und 30 Vol.-%, beispielsweise zu 25 Vol.-%, des Fasermaterials auf. Die Erfinder haben erkannt, dass selbst mit den zuvor beschriebenen Kurzfaseranteilen noch Verbundmaterialien hergestellt werden können, die für die unten beschriebenen Einsatzzwecke geeignet sind. Dadurch kann zumindest ein Anteil von besonders niederwertigem Fasermaterial in dem erfindungsgemäßen Verbundmaterial wiederverwendet werden, was dessen Umweltverträglichkeit erhöht.

Als besonders bevorzugt wurde die Kombination des zuvor beschriebenen Hauptfaseranteils mit dem Kurzfaseranteil erkannt, insbesondere wobei das Volumenverhältnis von Hauptfaseranteil zu Kurzfaseranteil zwischen 1:1 und 5:1, vorzugsweise zwischen 2,0:1 und 3,5:1, besonders bevorzugt zwischen 2,5:1 und 3,1:1, beträgt. Beispielsweise kann der Hauptfaseranteil zu 70 Vol.-% des Fasermaterials und der Kurzfaseranteil zu 25 Vol.-% des Fasermaterials vorliegen.

Es hat sich herausgestellt, dass insbesondere die Kombination aus dem Bindemittel in den nachfolgend beschriebenen Mengenanteilen, dem zuvor definierte Hauptfaseranteil und dem zuvor beschriebenen Kurzfaseranteil ein Verbundmaterial bereitstellt, das einen hohen Anteil an anderweitig kaum wiederverwertbaren Materialien aufweist und für die unten beschriebenen Zwecke geeignet ist

Es hat sich ferner als bevorzugt herausgestellt, dass ein Langfaseranteil von wenigstens 1 Vol.-%, insbesondere von wenigstens 1,5 Vol.-%, 2 Vol.-%, 2,5 Vol.-%, 3 Vol.-%, 3,5 Vol. -%, 4,0 Vol.-% oder 4,5 Vol.-%, des Fasermaterials eine Faserlänge von mehr als 2 mm aufweist, insbesondere in einem Faserlängenbereich zwischen mehr als 2 mm und maximal 5 mm liegt. Insbesondere beträgt der Langfaseranteil höchstens 10 Vol.-%, vorzugsweise höchstens 9 Vol.-%, 8 Vol.-%, 7 Vol.-%, 6 Vol.-% oder 5 Vol.-%. Des Fasermaterials.

Es hat sich herausgestellt, dass Fasern mit einer Länge von mehr als 2 mm das Verbundmaterial weich machen. Die oben beschriebenen Mindestvolumenanteile haben sich hierzu als bevorzugt herausgestellt. Um die zuvor beschriebenen, mit längeren Fasern einhergehenden, Verklumpungen und den damit einhergehenden großen Wasserverbrauch weitestgehend zu vermeiden hat es sich als bevorzugt erwiesen, die oben beschriebenen Maximalvolumenanteile einzuhalten. Des Weiteren hat sich gezeigt, dass die gewünschte Weichheit bereits mit Faserlängen zwischen 2 mm und 4 mm, insbesondere zwischen 2 mm und 3 mm erreichbar ist. Insofern hat es sich als bevorzugt erwiesen, den Langfaseranteil auf Fasern zu beschränken die maximal 5 mm lang sind. Als besonders bevorzugt hat es sich erweisen, dass wenigstens 50 Vol.-%, 60 Vol.-%, 70 Vol.-%, 80 Vol.-% oder 90 Vol.-% des Langfaseranteils in einem Faserlängenbereich von mehr als 2 mm und maximal 4 mm, bevorzugt maximal 4 mm, liegen und/oder maximal 10 Vol.-%, 8 Vol.-%, 6 Vol.-%, 4 Vol.-%, 2 Vol.-%, 1 Vol.-%, 0,5 Vol.-%, oder 0 Vol.-% des Langfaseranteils in einem Faserlängenbereich von mehr als 3 mm oder 4 mm und maximal 5 mm liegen. So hat sich Beispielsweise eine Verteilung von etwa 4,5 Vol.-% des Fasermaterials in einem Faserlängenbereich von mehr als 2 mm und maximal 3 mm und von etwa 0,5 Vol.-% des Fasermaterials in einem Faserlängenbereich von mehr als 3 mm und maximal 5 mm als vorteilhaft erwiesen.

Als besonders bevorzugt hat sich die Kombination des zuvor beschriebenen Hauptfaseranteils, des Kurzfaseranteils und/oder des Langfaseranteil herausgestellt. Eine bevorzugte Kombination sieht vor, zwischen 65 und 75 Vol.-% des Fasermaterials durch den Hauptfaseranteil und zwischen 2 und 7 Vol.-% des Fasermaterials durch den Langfaseranteil auszubilden. Eine besonders bevorzugte Kombination sieht vor zwischen 20 und 30 Vol.-% des Fasermaterials durch den Kurzfaseranteil, zwischen 65 und 75 Vol.-% des Fasermaterials durch den Hauptfaseranteil und zwischen 2 und 7 Vol.-% des Fasermaterials durch den Langfaseranteil auszubilden. Beispielsweise können etwa 25 Vol.-% des Fasermaterials durch den Kurzfaseranteil, 70 Vol.-% des Fasermaterials durch den Hauptfaseranteil und 4,5 Vol.-% des Fasermaterials durch den Langfaseranteil ausgebildet werden. Die verbleibenden 0,5 Vol.-% können beispielsweise durch Fasern mit einer Länge von mehr als 3, mm, 4mm oder 5 mm ausgebildet werden.

Die zuvor beschriebenen Volumenanteile der Faserlängenverteilung können insbesondere mittels dynamischer Bildanalyse, beispielsweise gemäß ISO 13322-2:2006, ermittelt werden. Die Messung kann während der Herstellung des Verbundmaterials erfolgen, beispielsweise kann nach dem Zerkleinern von Fasermaterial, insbesondere durch einem Refiner, und/oder vor dem Trocknen des das Fasermaterial enthaltenden Gemisches, eine Stichprobe entnommen und mittels dynamischer Bildanalyse gemessen werden. Die Messung kann aber auch auf Basis von bereits getrocknetem Verbundmaterialien und/oder von das Verbundmaterial enthaltenden Erzeugnissen erfolgen. Dafür kann das Verbundmaterial beispielsweise über ein geeignetes Lösungsmittel wieder in ein insbesondere flüssiges Gemisch überführt werden und anschließend mittels dynamischer Bildanalyse die Faserlängenverteilung gemessen werden. Unter Annahme einer gleichen Dichte für alle Fasern entspricht der Massenanteil dem Volumenanteil. Es sei klar, dass die zuvor und nachfolgend beschriebenen Volumenanteile bzgl. der Faserlängen alternativ auch als Massenanteile realisiert werden können. Insbesondere sollen die beanspruchten Volumenanteile alternativ als Massenanteile beansprucht werden können.

Vorzugsweise umfasst das Fasermaterial Lederfasermaterial, insbesondere besteht zu wenigstens 10 Gew.-%, 20 Gew.-%, 30 Gew.-%, 40 Gew.-%, 50 Gew.-%, 70 Gew.-%. 80 Gew.-%, 90 Gew.-%, 95 Gew.-%, 99 Gew.-% oder 100 Gew.-% aus Lederfasermaterial, das den zuvor beschriebenen Hauptfaseranteil, Kurzfaseranteil und/oder Langfaseranteil, vorzugsweise wenigstens zwei davon, besonders bevorzugt alle drei, aufweist.

In einer alternativen Ausführungsform beträgt der Anteil des Pflanzenfasermaterials wenigstens 10 Gew.-%, 20 Gew.-%, 30 Gew.-%, 40 Gew.-%, 50 Gew.-%, 70 Gew.-%. 80 Gew.-%, 90 Gew.-%, 95 Gew.-%, 99 Gew.-% oder 100 Gew.-%, bezogen auf das Gesamtgewicht des Fasermaterials. Dadurch kann der hohe Ressourcenverbrauch, der beim alternativen Einsatz von Tierfasermaterial, insbesondere Lederfasermaterial, mit der Züchtung von Tieren und mit der Verarbeitung des dadurch gewonnenen Fasermaterials einhergeht, zumindest teilweise reduziert werden, was die ökologische Verträglichkeit des Verbundmaterials steigert.

Insbesondere kann das Fasermaterial Pflanzenfasermaterial der Ordnung der Poales aufweisen. Vorzugsweise umfasst das Pflanzenfasermaterial der Ordnung der Poales Pflanzenfasermaterial der Familie der Poaceae, insbesondere besteht daraus. Besonders bevorzugt umfasst das Pflanzenfasermaterial der Ordnung der Poales Pflanzenfasermaterial der Unterfamilien der Pooideae, der Orzyoideae, der Panicoideae, der Antropogonoideae oder Mischungen von zwei oder mehr davon, insbesondere besteht daraus. Insbesondere umfasst das Pflanzenfasermaterial der Poales Pflanzenfasermaterial des Stammes der Triticeae, Aveneae, Orzyzeae, Pariceae, Zeeae oder Mischungen von zwei oder mehr davon, insbesondere besteht daraus. Besonders bevorzugt umfasst das Pflanzenfasermaterial der Ordnung der Poales Pflanzenfasermaterial der Gattung von Weizen, Dinkel Roggen, Gerste, Hafer, Reis, Hirse, Mais oder Mischungen von zwei oder mehr davon, insbesondere besteht daraus.

Es wurde erkannt, dass die zuvor beschriebenen Pflanzenfasermaterialien der Ordnung der Poales für gattungsgemäße Verbundmaterialien eingesetzt werden können. Insbesondere im Zusammenspiel mit den nachfolgend beschriebenen Mengenanteilen von Bindemittel und Pflanzenfasermaterial hat sich herausgestellt, dass entsprechende Verbundmaterialien für die weiter unten beschriebenen Zwecke eingesetzt werden können. Ein Vorteil an derartigem Pflanzenfasermaterialien besteht darin, dass diese nahezu weltweit bei der Nahrungsmittelherstellung gewonnen werden und diese somit lokal hergestellt und verarbeitet werden können, wodurch emissionsverursachende Transporte vermieden werden. Darüber hinaus ist durch die hohe Bedeutung dieser Pflanzenfasermaterialien in der Nahrungsmittelherstellung damit zu rechnen, dass dieses Fasermaterial langfristig zur Verfügung stehen wird. Ein weiterer Vorteil besteht darin, dass große Teile von derartigem Pflanzenfasermaterial als Rückstände bei der Nahrungsmittelherstellung anfallen, sodass deren Verwendung in gattungsgemäßen Verbundmaterialien den Ausnutzungsgrad der Lebensmittelherstellung erhöht und diese somit nachhaltiger macht.

Besonders bevorzugt umfasst das Pflanzenfasermaterial der Gattung Poales Pflanzenfasermaterial aus Spreu, insbesondere Getreidespreu. Als Spreu, insbesondere Getreidespreu, werden vorzugsweise die beim Dreschen von Getreide, wie Weizen, Dinkel, Roggen, Gerste, Hafer, Reis, Hirse und/oder Mais, abfallenden Bestandteile der jeweiligen Getreidepflanze bezeichnet. Vorzugsweise umfasst das Spreu die Spelze, welche die Blüte schützend umgibt, die Hülse, Granne, Samenhülle und/oder Stängelteile, wobei auch Bestandteile der Frucht bzw. des Samens bzw. der Blüte vorhanden sein können. Unter Getreide im Sinne der vorliegenden Erfindung seien insbesondere sämtliche unter die Gattung der Poales fallenden Pflanzenfasermaterialien zu verstehen. Besonders bevorzugt weist das Pflanzenfasermaterial Spelzfasermaterial auf. Unter Spelzfasermaterial ist insbesondere aus Spelze gewonnenes Fasermaterial zu verstehen.

Vorzugsweise beträgt der Anteil des Pflanzenfasermaterials, das aus Spreu, insbesondere Getreidespreu, gewonnen wird, wenigstens 20 Gew.-%, 30 Gew.-%, 40 Gew.-%, 50 Gew.-%, 60 Gew.-%, 70 Gew.-%, 80 Gew.-%, 90 Gew.-%, 95 Gew.-% oder 99 Gew.-%, bezogen auf das Gesamtgewicht des Pflanzenfasermaterials der Ordnung Poales. Zusätzlich oder alternativ beträgt vorzugsweise der Anteil des Pflanzenfasermaterials der Ordnung Poales wenigstens 20 Gew.-%, 30 Gew.-%, 40 Gew.-%, 50 Gew.-%, 60 Gew.-%, 70 Gew.-%, 80 Gew.-%, 90 Gew.-%, 95 Gew.-% oder 99 Gew.-%, bezogen auf das Gesamtgewicht des Fasermaterials, insbesondere Pflanzenfasermaterials.

Ein weiterer Vorteil in dem Einsatz vom Pflanzenfasermaterial, insbesondere Spelzfasermaterial, das aus Spreu, insbesondere Getreidespreu, gewonnen wird, besteht darin, dass die Herkunft aus Spreu dem Verbundmaterial anzusehen ist, was dem Verbundmaterial ein auf vegane Bestandteile hinweisendes Aussehen (veganes Aussehen/veganer Eindruck) verleiht. Dadurch kann beispielsweise beim Einsatz des Verbundmaterials für Wandbekleidung in Verkaufsräumen die Sympathie des Kunden für den Verkäufer gesteigert werden. Außerdem kann beispielsweise bei der Verkleidung von Gegenständen das dadurch erzielte vegane Aussehen einen Kaufanreiz darstellen.

Alternativ oder zusätzlich kann das Pflanzenfasermaterial aus Sekundärrohstoffen und/oder aus Produktionsrückständen gewonnenes Fasermaterial aufweisen. Derartiges Pflanzenfasermaterial wird zur vereinfachten Lesbarkeit folgend als rezykliertes Pflanzenfasermaterial bezeichnet.

Unter Produktionsrückständen sind insbesondere Rückstände zu verstehen, die bei der Verarbeitung von Fasermaterial anfallen. Als Beispiele seien insbesondere Schneid- und Stanzrückstände, beispielsweise bei der Verarbeitung von Stoffen und Papier, Rückstände aus der Baumwollverarbeitung, insbesondere Kämmlinge, Grundbaumwolle, Kardenabfälle, Schlichtfäden und Reißfasermaterial, aber auch Rückstände aus der Lebensmittelverarbeitung, wie Spelze, zu verstehen.

Unter Sekundärrohstoff ist insbesondere aus Produkten, wie Papierbechern und Textilen, wiedergewonnenes Material zu verstehen.

Rezyklierte Pflanzenfasermaterial zeichnen sich insbesondere durch eine gegenüber Frischfasermaterial kürzere Faserlänge sowie eine geschwächte, insbesondere ausgefranste, Struktur auf. Ausgefranste Fasern erkennt der Fachmann unter dem Mikroskop. Als Beispiel für eine Methode zum Erkennen von ausgefransten Fasern wird auf die Studie "Wie entstehen ausgefranste Fasern während des Veredelungsprozesses - Identifizierung von ausgefransten Fasern unter einem hochauflösenden Mikroskop" (ISBN-13: 9786202742887) verwiesen, deren diesbezüglicher Inhalt hiermit in den Offenbarungsgehalt dieser Anmeldung einbezogen wird

In der Textilindustrie werden große Mengen von Fasern verarbeitet. Dabei entstehen an einigen Stellen der Wertschöpfungskette Produktionsrückstände. Beispielsweise bleiben beim Auskämmen von abstehenden Fasern aus Garnen die ausgekämmten Fasern als Produktionsrückstände zurück. Diese Fasern werden als Kämmlinge bezeichnet. Insbesondere durch das Auskämmen erhalten die Fasern eine ausgefranste Struktur. Da Kämmlinge in der Regel eine relativ geringe Faserlänge aufweisen und durch den Auskämmprozess stark mechanisch belastet werden, fanden diese vor der vorliegenden Erfindung nur sehr beschränkt Einsatzgebiete.

Weitere Produktionsrückstände fallen bei der Verarbeitung von Rohbaumwolle an. Der Samen der Baumwolle bildet als Verlängerung seiner Epidermis längere Haare, die als Lint bezeichnet werden, und drei bis fünf Tage nach der Blüte kürzere Haare, die Linter oder Grundbaumwolle genannt werden. Zur Gewinnung von Baumwolle wird Rohbaumwolle entkörnt. Dabei werden die Lints von den Samen abgerissen, während die Grundbaumwolle am Samen verbleibt. In der Regel bleiben bei 4 Gramm Rohbaumwolle nach dem Entkörnen etwa 1,5 Gramm Grundbaumwolle übrig. Mit sogenannten Lintermaschinen, Lintergins oder Entwollmaschinen wird die Grundbaumwolle von den Samen entfernt. In der Regel werden Lints zu dünnen Fäden gesponnen und beispielsweise für Textilien verwendet. Da Grundbaumwolle eine geringere Faserlänge und durch den zweifachen Entkernprozess eine geringere Festigkeit aufweist, fand diese vor der vorliegenden Erfindung nur wenige Einsatzgebiete, wie in der Papierherstellung, als Filz oder als Polstermaterial.

Produktionsrückstände fallen außerdem beim Kardieren beispielsweise von Baumwolle an. Neben Schmutz und Staub umfasst der sogenannte Kardenabfall auch Fasern. Diese können über Kardenabfall-Reinigungsmaschinen von dem verbleibenden Abfall gereinigt werden. Da von Kardenabfall gewonnene Fasern, insbesondre auf Grund des zweifachen Verarbeitens, nämlich in der Kardiermaschine und in der Kardenabfall-Reinigungsmaschine, in der Regel sehr kurze Faserlänge und eine geringe Festigkeit aufweisen, fanden auch diese vor der vorliegenden Erfindung nur beschränkt Einsatzgebiete.

Weitere Produktionsrückstände fallen in Form von Schlichtfasern an. Schlichtfasern sind mit einem Schlichtmittel, insbesondere umfassend Stärke, Polyvinylacetat, Natrium-Carboxymethylcellulose und/oder Polyacrylate, beschichtete Fasern. Schlichtmittel werden insbesondere vor dem Webprozess zur Stärkung der Kettfäden aufgebracht. Von dem fertigen Gewebe werden die Schlichtmittel mittels der sogenannten Entschlichtung wieder entfernt. Fäden, die aus Produktionsrückständen gewonnen werden, die zwischen dem Schlichten und dem Entschlichten anfallen, weisen das Schlichtmittel auf. Eine Entschlichtung dieser Produktionsrückstände ist häufig aus ökonomischen und/oder ökologischen Gründen nicht sinnvoll, sodass Schlichtfäden vor der vorliegenden Erfindung nur eingeschränkte wiederverwendet wurden.

Aber auch bei der Herstellung, insbesondere in der Weberei, und Verarbeitung von Geweben und Gestricken zu Kleidung fallen beispielsweise Schnittreste als Produktionsrückstände an. Schließlich fallen auch die Kleidungsstücke, beispielsweise Jeans oder T-Shirts, am Ende ihres Lebenszyklus als Sekundärrohstoffe an. Aus Nachhaltigkeitsgründen ist es geboten, diese Rückstände wiederzuverwerten. So ist es beispielsweise bekannt gebrauchte Textilien und Schnittreste über den sogenannten Reißprozess mit einem Reißtambour in Reißfasern zu überführen. Auch diese erkennt der Fachmann insbesondere an Ihrer ausgefransten Struktur. Dadurch kann das Textil wieder teilweise in Fasern überführt werden. Neben Fasern umfassen Reißfasern aber häufig auch nicht faserförmige Textilreste, wie Pitzen, Fadenstücke und Textilflächenreste, welche die Wiederverwertbarkeit der Fasern erschweren. Im Rahmen der vorliegenden Erfindung wurde erkannt, dass diese Textilreste zumindest teilweise in einem Zerkleinerungsschritt, beispielsweise mit Schneidmühle und/oder Refiner, insbesondere Kegelrefiner oder Scheibenrefiner, in Fasermaterial überführt werden können.

Sekundärrohstoffe fallen außerdem in der Papierindustrie, insbesondere in Form von Altpapierstoff an, dessen Faserlänge mit jedem Wiederverwertungszyklus kleiner wird, bis die Fasern an einem Punkt den nicht wiederverwertbaren Abfällen zugeordnet werden.

Zur Wiederverwertung von rezykliertem Fasermaterial, insbesondere von Reißfasern und/oder Kämmlingen, ist es bekannt diese wieder zu Garnen zu spinnen. Hierzu ist jedoch je nach Spinnverfahren eine gewisse Durchschnittslänge der Fasern erforderlich. Um diese bereitzustellen, werden zu kurze Fasern teilweise aussortiert, wodurch bereits beim ersten Wiederverwertungszyklus Rückstände entstehen, die auf diese Weise nicht wiederverwertet werden können. Aber selbst die Fasern, die erfolgreich wiederverwertet werden können, werden durch jeden weiteren Wiederverwertungszyklus, beispielsweise durch Reißen, kürzer, bis sie selbst zu nicht wiederverwertbaren Rückständen werden. Überraschenderweise hat sich herausgestellt, dass rezykliertes Pflanzenfasermaterial nicht nur durch das Spinnen in Garne wiederverwendet werden kann, sondern auch in gattungsgemäßen Verbundmaterialien. Insbesondere im Zusammenhang mit den zuvor beschriebenen Mengenanteilen von Bindemittel und Fasermaterial können derartige Verbundmaterialien für die weiter unten beschriebenen Anwendungszwecke verwendet werden. Insbesondere durch den Einsatz von Bindemitteln kann dabei rezykliertes Pflanzenfasermaterial mit deutlich kürzeren Faserlängen wiederverwendet werden als bei der Herstellung von Garnen. So ist beispielsweise bei der Herstellung von Garnen in der Regel eine Mindestfaserlänge von 25 mm der wiederzuverwertenden Fasern erforderlich. Im Gegensatz dazu kann mit dem erfindungsgemäßen Verbundmaterial auch Fasermaterial wiederverwendet werden, das in einem deutlich geringeren Faserlängenbereich, wie insbesondere im Detail weiter unten beschrieben, liegt. Insbesondere hat sich herausgestellt, dass Fasermaterial mit einer Faserlänge von weniger als 2 mm wiederverwendet werden kann, wofür es vor der vorliegenden Erfindung keine höherwertigen Wiederverwendungsmöglichkeiten gab. Unter höherwertigen Wiederverwendungsmöglichkeiten sind insbesondere die weiter unten beschriebenen Einsatzgebiete des Verbundmaterials zu verstehen. Dabei wurde festgestellt, dass die mit rezykliertem Pflanzenfasermaterial einhergehende kürzere Faserlänge für die Einsatzgebiete der vorliegenden Erfindung nicht nur ausreicht, sondern sogar vorteilhaft ist. Denn die vorliegende Erfindung nutzt insbesondere Fasern mit relativ kurzer Faserlänge, die beim Einsatz von längeren Fasern als Ausgangsmaterial zunächst in einem zeit- und wasserverbrauchintensiven Verfahren, insbesondere mittels Refiner, zerkleinert werden müssen. Durch den Einsatz von rezykliertem Pflanzenfasermaterial werden daher zusätzlich zum Erschließen neuer Einsatzgebiete, die Kosten und der Ressourcenverbrauch gegenüber Primärfaserrohstoffen reduziert.

Insbesondere ist das rezyklierte Fasermaterial ausgewählt aus rezykliertem Fasermaterial aus der Baumwollverarbeitung, der Textilherstellung, der Papierherstellung und/oder der Lebensmittelverarbeitung. Vorzugsweise ist das rezyklierte Fasermaterial ausgewählt aus Kämmlingen, Grundbaumwolle, Kardenrückständen, Schlichtfasern, Reißfasern, Papierfasermaterial, und/oder Spelzfasermaterial. Alternativ oder zusätzlich weist das rezyklierte Pflanzenfasermaterial Baumwollfasermaterial, Holzfasermaterial und/oder Pflanzenfasermaterial der Gattung der Poales auf. Insbesondere beträgt der Anteil der zuvor beschriebenen bevorzugten rezyklierten Fasermaterialien wenigstens 50 Gew.-%, 75 Gew.-%, 90 Gew.-% oder 95 Gew.-%, 97 Gew.-% oder 99 Gew.-%, bezogen auf das Gesamtgewicht des rezyklierten Pflanzenfasermaterials.

In bevorzugten Ausführungsformen weist das rezyklierte Pflanzenfasermaterial rezykliertes Baumwollfasermaterial, insbesondere in Form von Reißbaumwolle, Baumwollkämmlingen, Grundbaumwolle, Baumwollkardenrückständen und/oder Baumwollschlichtfasern auf. Besonders bevorzugt liegt der Anteil der rezyklierten Baumwolle, bezogen auf das Gesamtgewicht des Pflanzenfasermaterials, zwischen 30% und 100%, 50% und 95%, besonders bevorzugt zwischen 70% und 90%. Der Einsatz von Baumwollfasern hat sich als besonders bevorzugt herausgestellt, da diese als Produktionsrückstände in großen Mengen zur Verfügung stehen und spätestens nach dem ersten oder zweiten Wiederverwendungszyklus aufgrund ihrer kurzen Faserlänge nicht mehr für Textilien wiederverwendet werden können. Besonders bevorzugt handelt es sich bei dem rezyklierten Pflanzenfasermaterial um aus Kleidung, insbesondere aus Jeansstoffen, wiedergewonnenes Pflanzenfasermaterial. Besonders bevorzugt handelt es sich dabei um Pflanzenfasermaterial, das aus gefärbten Kleidungsstücken wiedergewonnenen wird, was an der Färbung der daraus wiedergewonnenen Pflanzenfasermaterial erkennbar ist. Besonders bevorzugt handelt es sich bei der Reißbaumwolle um aus Jeansstoff wiedergewonnenes Pflanzenfasermaterial, die insbesondere an ihrer Indigofärbung, die für Jeansstoffe üblich ist, erkennbar ist. Geeignetes Ausgangsmaterial für die Herstellung des erfindungsgemäßen Verbundwerkstoffs mit rezyklierten Baumwollfasern sind insbesondere die Baumwollschlichtfäden mit der Artikelnummer 449S1G des Unternehmens WSR Advanced Raw Materials GmbH, die aus Jeans gewonnene Reißbaumwolle mit der Artikelnummer 10348 des Unternehmens ALTEX Textil-Recycling oder die Reißbaumwolle mit der Artikelnummer 11106 des Unternehmens des Unternehmens ALTEX Textil-Recycling.

Üblicherweise handelt es sich bei rezykliertem Pflanzenfasermaterial um ein Fasergemisch. Dies liegt insbesondere daran, dass beispielsweise Kleidungsstücke aufgrund erhöhter Anforderung an deren Komfort in der Regel einen Mindestanteil an Fasern aufweist, die die Eigenschaften des Garns beeinflussen. Beispielsweise werden in der Regel Elastomerfasern, wie Spandexfasern, eingesetzt, um die Elastizität der Kleidungsstücke zu erhöhen. Weiterhin werden häufig Polyesterfasern zur Erhöhung der Formstabilität der Kleidungsstücke eingesetzt. Dies führt dazu, dass rezykliertes Pflanzenfasermaterial, das aus derartigen Textilien gewonnen wird, einen Anteil an Mischfasern aufweist. Bei der klassischen Wiederverwertung von rezykliertem Pflanzenfasermaterial in Form von Garnen beeinträchtigt der Anteil der Mischfasern die Eigenschaften der daraus gesponnenen Garne. Dadurch ist rezykliertes Pflanzenfasermaterial mit einem Anteil an Mischfasern nur begrenzt für die Wiederverwertung in Garnen geeignet. Je höher der Anteil der Mischfasern wird, umso geringer wird die Eignung für die Wiederverwertung in Garnen.

Unter Mischfasern sind insbesondere nichtpflanzliche Fasern, insbesondere keine Baumwollfasern, Holzfasern und/oder Fasern der Ordnung der Poales, zu verstehen. Insbesondere sind unter Mischfasern synthetische Fasern und/oder Naturfasern zu verstehen. Dabei kommen sämtliche, insbesondere in der Textilindustrie eingesetzten Mischfasern in Betracht. Insbesondere kommen für die Mischfasern Fasern ausgewählt aus der Gruppe bestehend aus Polyamidfasermaterial, insbesondere Polyesterfasermaterial, Polyacrylfasermaterial, Elastanfasermaterial, Tierfasermaterial, wie Lederfasermaterial, Wollfasermaterial und/oder Seidenfasermaterial, oder Mischungen von einem oder mehreren daraus in Betracht. Überraschenderweise hat sich herausgestellt, dass selbst ein hoher Anteil von Mischfasern bei erfindungsgemäßen Verbundmaterialien eingesetzt werden kann, ohne deren Eignung für die nachfolgend beschriebenen Zwecke zu beeinträchtigen. Insbesondere Mischfaseranteile von bis zu 25 Gew.-% haben sich als unproblematisch herausgestellt.

Insbesondere kann das rezyklierte Pflanzenfasermaterial ein Fasergemisch aus Pflanzenfasermaterial, insbesondere Baumwollfasern, Holzfasern und/oder Fasern der Ordnung der Poales, und Mischfasern aufweisen. Insbesondere beträgt der Anteil der Mischfasern wenigstens 1 Gew.-%, 2 Gew.-%, 3 Gew.-%, 5 Gew.-%, 10 Gew.-%, 15 Gew.-%, 20 Gew.-% und/oder 25 Gew.-%. Alternativ oder zusätzlich beträgt der Anteil der Mischfasern höchstens 50 Gew.-%, 40 Gew.-%, 30 Gew.-%, 25 Gew.-%, 20 Gew.-%, 15 Gew.-% oder 10 Gew.-%, bezogen auf das Gesamtgewicht des rezyklierten Pflanzenfasermaterials. Vorzugsweise beträgt der Mischfaseranteil 1 Gew.-% bis 50 Gew.-%, insbesondere 5 Gew.-% bis 35 Gew.-%, besonders bevorzugt 10 Gew.-% bis 25 Gew.-%, bezogen auf das Gesamtgewicht des rezyklierten Pflanzenfasermaterials.

In einem Ausführungsbeispiel besteht das rezyklierte Pflanzenfasermaterial, insbesondere Reißfasermaterial, zu mindestens 75 Gew.-% aus Pflanzenfasermaterial, insbesondere Baumwolle, und zu höchstens 25 Gew.-% aus Mischfasern. Insbesondere wird bei dieser Ausführungsform rezykliertes Pflanzenfasermaterial mit einer mittleren Ausgangsfaserlänge zwischen 30 und 50 mm verwendet. Die mittlere Faserlänge ist durch Messen der Faserlänge der Fasern in einem Toleranzbereich und anschließendes Mitteln der Faserlänge über die Gesamtanzahl der gemessenen Fasern ermittelbar. Vorzugsweise liegt der Toleranzbereich zwischen 5 mm und 80 mm. Das rezyklierte Pflanzenfasermaterial gemäß dieser Ausführungsform der Erfindung kann nachfolgend zerkleinert werden, um eine Faserverteilung wie in dem nachfolgend beschriebenen Aspekt der Erfindung beschrieben zu erhalten. Geeignetes Pflanzenfasermaterial für diese Ausführungsform ist beispielsweise Reißbaumwolle mit des Artikel Nr. 11106 des Unternehmens ALTEX Textil-Recycling

In einer alternativen Ausführungsform wird rezykliertes Pflanzenfasermaterial, insbesondere Reißfasermaterial, mit einem Pflanzenfasermaterialanteil, insbesondere Baumwollgewichtsanteil, von mindestens 90 Gew.-% und einem Mischfaseranteil von höchstens 10 Gew.-%, bezogen auf das Gesamtgewicht des rezyklierten Pflanzenfasermaterials, verwendet. Die Fasern bei dieser Ausführungsform können gefärbt, insbesondere blau gefärbt, sein. Vorzugsweise beträgt die mittlere Faserlänge bei dieser Ausführungsform 15 bis 30 mm, wobei der Toleranzbereich, in dem die Fasern zur Ermittlung der Faserlänge gemessen werden, 3 mm bis 40 mm betragen kann. Geeignetes rezykliertes Pflanzenfasermaterial für diese Ausführungsform ist beispielsweise aus Jeans gewonnene Reißbaumwolle mit der Artikelnummer 10348 des Unternehmens ALTEX Textil-Recycling

Alternativ zum Einsatz von Baumwolle hat sich der Einsatz von Papierfasermaterial, als rezykliertes Pflanzenfasermaterial, insbesondere Sekundärrohstoff, als vorteilhaft herausgestellt. Vorzugsweise beträgt der Anteil von Papierfasermaterial wenigstens Gew.-%, 30 Gew.-%, 40 Gew.-%, 50 Gew.-%, 60 Gew.-%, 70 Gew.-%, 80 Gew.-%, 90 Gew.-%, 95 Gew.-% oder 99 Gew.-% bezogen auf das Gesamtgewicht des rezyklierten Pflanzenfasermaterials. Unter Papierfasermaterial ist insbesondere aus Papier und/oder Pappe gewonnenes Fasermaterial zu verstehen. Papierfasermaterial kann auch als Altpapierstoff bezeichnet werden. Geeignetes Papierfasermaterial ist insbesondere Altpapierstoff der Gruppen 2 bis 5 gemäß DIN EN 643:2014-11. Bevorzugt handelt es sich bei dem Altpapierstoff um Altpapierstoff der Gruppe 2 oder 5 gemäß DIN EN 643:2014-11. Als besonders geeignet hat sich Altpapierstoff der Klassen 2.10.00, 2.11.00, 5.05.00, 5.05.01, 5.06.00, 5.06.01, 5.07.00, 5.07.01, 5.14.00 und/oder 5.14.01 gemäß DIN EN 643:2014-11 herausgestellt. Als besonders bevorzugt hat sich Altpapierstoff der Klasse 5.14.00 und/oder 5.14.01 herausgestellt.

Vorzugsweise ist das Papierfasermaterial aus Papier und/oder Pappe gewonnen, das/die ein Additiv umfasst, das ausgewählt ist aus der Gruppe, bestehend aus einem Flockungsmittel, einem Fixiermittel, einem Entwässerungshilfsmittel, einem Füllstoff und einem Nassfestmittel, insbesondere ausgewählt aus Polyamin-Epichlorhydrin-Harze, Harnstoff- oder Melamin-Formaldehyd-Harze und vernetzte Aldehyde wie glyoxylierte Polyacrylamide. Handelsnamen für geeignete Nassfestmittel sind GILUTON, LURESIN KS, QUIMEX 8015, AMRES ULTRA 25. Insbesondere nassfeste Papiere, wie die gemäß EN 643 den Klassen 5.05.00, 5.05.01, 5.06.00, 5.06.01, 5.07.00, 5.07.01, 5.14.00 und/oder 5.14.01 zugeordneten Papiere, können auf Grund der darin eingesetzten Nassfestmittel nicht als Recyclingpapier wiederverwendet werden. Denn die darin verwendeten Nassfestmittel können mit dem für die Papierindustrie klassischem Aufschlagen nicht oder nur unter hohem Reinigungsaufwand und/oder Ausscheidungsmengen in eine homogene Faserpulpe überführt werden. Dies wird auch als fehlende Repulpierbarkeit bezeichnet. Es hat sich gezeigt, dass dieses Problem durch Zerfasern, beispielsweise durch den/die zuvor und nachfolgend beschriebene/n Refiner, insbesondere Kegelrefiner oder Scheibenrefiner, und/oder Schneidmühle gelöst werden kann. Dadurch ermöglicht das vorliegende Verbundmaterial die Wiederverwertung von nassfestem Papier. Vorzugsweise umfasst das Papierfasermaterial daher aus nassfestem Papier wiedergewonnenes Fasermaterial. Insbesondere lässt sich dies in dem Verbundmaterial durch das Vorhandensein von Nassfestmitteln nachweisen. Insbesondere weist das Verbundmaterial Nassfestmittel auf.

Vorzugsweise beträgt der Anteil des rezyklierten Pflanzenfasermaterial, insbesondere der zuvor beschriebenen bevorzugten rezyklierten Pflanzenfasermaterialien, wenigstens 20 Gew.-%, 30 Gew.-%, 40 Gew.-%, 50 Gew.-%, 60 Gew.-%, 70 Gew.-%, 80 Gew.-%, 90 Gew.-%, 95 Gew.-% oder 99 Gew.-%, bezogen auf das Gesamtgewicht des Pflanzenfasermaterials.

Alternativ oder zusätzlich kann das Pflanzenfasermaterial Holzfasermaterial aufweisen. Unter Holzfasermaterial soll insbesondere aus Holz gewonnenes Fasermaterial zu verstehen sein. Unter Holz ist insbesondere das harte Gewebe der Sprossachsen (Stamm, Äste und Zweige) von Bäumen und Sträuchern zu verstehen. Insbesondere ist unter Holz das von Kambium erzeugte sekundäre Xylem der Samenpflanzen definiert. Nach dieser Definition sind insbesondere Gewebe von Palmen und anderen höheren Pflanzen kein Holz im Sinne der vorliegenden Erfindung. Insbesondere zeichnet sich Holz durch die Einlagerung von Lignin in die Zellwand aus. Insbesondere ist unter Holz daher lignifiziertes (verholztes) pflanzliches Gewebe zu verstehen. Vorzugsweise ist unter Holz Nadelholz und/oder Laubholz zu verstehen. Unter Nadelholz ist insbesondere Holz mit einem Zelluloseanteil von 42 bis 49 Gew.-%, einem Hemizelluloseanteil von 24 bis 30 Gew.-%, einem Ligninanteil von 25 bis 30 Gew.-%, einem Extraktstoffanteil von 2 bis 9 Gew.-% und/oder einem Mineralienanteil von 0,2 bis 0,8 Gew.-% zu verstehen. Unter Nadelholz ist insbesondere ein Holz mit einem Zelluloseanteil von 42 bis 51 Gew.-%, ein Hemizelluloseanteil von 27 bis 40 Gew.-%, einem Ligninanteil von 18 bis 24 Gew.-%, einem Extraktstoffanteil von 1 bis 10 Gew.-% und einem Mineralienanteil von 0,2 bis 0,8 Gew.-% zu verstehen. Holz weist insbesondere einen spezifischen anatomischen Aufbau auf, sodass sich Holzarten anhand ihrer Makro- und Mikrostrukturen voneinander unterscheiden lassen. Hierzu zieht der Fachmann die wissenschaftliche Beschreibung von Holzstrukturen und Bestimmungen von Holzarten der Holzanatomie heran. Alternativ oder zusätzlich zum Holzfasermaterial kann das Verbundmaterial auch Zellulosefasermaterial aufweisen, insbesondere in den nachfolgend beschriebenen Mengenangaben des Holzfasermaterials. Insbesondere kann es sich bei dem Zellulosefasermaterial um Zellulosestoff und/oder Altpapierstoff, der auch als Papierfasermaterial bezeichnet werden kann, handeln.

Ein wesentlicher Vorteil an der Verwendung von aus Holz gewonnenen Fasern besteht darin, dass Holz große Mengen an CO₂ einspeichert, die durch die Kompostierung von Holz wieder freigesetzt und somit der Atmosphäre zugeführt werden. Demnach besteht ein Bedarf daran, das in Holz gespeicherte CO₂ so lange wie möglich in dem Produktzyklus zu behalten, um die Freisetzung des CO₂ zu verhindern. Es wurde erkannt, dass es von Vorteil ist, aus Holz gewonnenes Fasermaterial für die nachfolgend beschriebenen Einsatzzwecke zu verwenden, insbesondere für die Ummantelung, Kaschierung oder Tapezierung von Wänden, Böden, Decken oder Fensterrahmen, da diese in der Regel einen langen Produktlebenszyklus haben und somit das in dem Holz gespeicherte CO₂ langfristig binden. Ein weiterer Vorteil von Holz besteht darin, dass dieser als natürlicher CO₂-Speicher auch langfristig als Fasermaterial zur Verfügung stehen wird.

Bevorzugt weist das Holzfasermaterial Zellstoff, Holzstoff und/oder Altpapierstoff auf, insbesondere bestehend aus einem oder einer Mischung von einem oder mehreren davon. Diese Stoffe stellen die wichtigsten Faserstoffe für die Herstellung von Papier dar. Papier wird heutzutage nicht nur für Schreibwaren wie Blattpapier eingesetzt, sondern auch für Verpackungen wie Lebensmittelverpackungen, und Behälter, wie To-Go-Becher und To-Go-Teller, aber auch für Einmalprodukte wie Strohhalme aus Papier. Dabei wird Holzfasermaterial bereits heute häufig recycelt. Jedoch verkürzt sich mit jedem Recyclingschritt die Faserlänge des Holzfasermaterials, wodurch dessen Wiederverwertbarkeit immer geringer wird, bis schlussendlich nicht wiederverwertbare Rückstände übrigbleiben. Dies ist vor allem vor dem Hintergrund problematisch, dass beispielsweise Papierverpackungen und Papierbehälter einen sehr kurzen Lebenszyklus haben, was dazu führt, dass selbst bei mehreren Wiederverwertungszyklen, das in dem Holz gespeicherte CO₂ bereits nach kurzer Zeit durch Kompostierung der Rückstände der Atmosphäre zugeführt werden muss. Ein weiteres Problem besteht darin, dass beispielsweise beim Einsatz von Holzfasermaterial für flüssigkeitsführende Anwendungen, wie To-Go-Kaffeebecher und/oder Strohhalme, eine Beschichtung aufgetragen werden muss, die das Durchweichen verhindert. Diese Beschichtungen sind teilweise nicht oder nur langsam biologisch abbaubar. Aber selbst wenn die Beschichtungen biologisch abbaubar sind, stehen sie einer Wiederverwertung des Fasermaterials zumindest für einige Recyclingprodukte teilweise im Weg. Insbesondere nassfeste Papiere können aus den zuvor beschriebenen Gründen nicht als Recyclingpapier wiederverwendet werden. Vorzugsweise umfasst das Fasermaterial daher aus nassfestem Papier wiedergewonnenes Fasermaterial.

Insofern ermöglicht das erfindungsgemäße Verbundmaterial eine deutlich längere Speicherung des in dem Holzmaterial gebundenen CO₂ insbesondere bei den nachfolgend beschriebenen Verwendungen. Darüber hinaus hat sich herausgestellt, dass das erfindungsgemäße Verbundmaterial auch Holzfasermaterial mit sehr kurzer Faserlänge, wie nachfolgend beschrieben, wiederverwertet werden kann und somit Fasermaterial, das für andere Einsatzgebiete, wie die Papierherstellung, nicht mehr geeignet ist, weiterverwertet werden kann. Insbesondere hat sich herausgestellt, dass selbst Rückstände, wie Rückstände von Beschichtungen von Behältern, wie Kaffeebechern, in dem Fasermaterial dessen Wiederverwendung für die nachfolgend beschriebenen Produkte nicht im Wege steht, sodass mit der vorliegenden Erfindung eine weitere Materialgruppe wiederverwertet werden kann, die zuvor den nicht wiederverwertbaren Rückständen zugeordnet wurde.

Es hat sich daher als besonders bevorzugt herausgestellt, dass das Holzfasermaterial Altpapierstoff, das auch als Papierfasermaterial bezeichnet werden kann, aufweist. Insbesondere weist das Holzfasermaterial Altpapierstoff zu einem Anteil von wenigstens 20 Gew.-%, 30 Gew.-%, 40 Gew.-%, 50 Gew.-%, 60 Gew.-%, 70 Gew.-%, 80 Gew.-%, 90 Gew.-%, 95 Gew.-% oder 99 Gew.-%, bezogen auf das Gesamtgewicht des Holzfasermaterials, auf. Altpapierstoff wird insbesondere auch als Sekundärfaserstoff bezeichnet. Unter Altpapierstoff ist insbesondere der aus Altpapier produzierte Halbstoff zu verstehen. Unter Papier ist insbesondere sowohl Papier als auch Pappe gemäß DIN6730 zu verstehen. Insbesondere zeichnet sich Papier durch eine flächenbezogene Masse von 7 bis 225 g/m2 und Pappe durch eine flächenbezogene Masse ab 225 g/m² aus.

Vorzugsweise weist der Altpapierstoff aus bedruckten oder anderweitig gefärbten Altpapier wiedergewonnen Altpapierstoff, insbesondere zu einem Anteil von 20 Gew.-%, 30 Gew.-%, 40 Gew.-%, 50 Gew.-%, 60 Gew.-%, 70 Gew.-%, 80 Gew.-%, 90 Gew.-%, 95 Gew.-% oder 99 Gew.-%, bezogen auf das Gesamtgewicht des Altpapierstoffs, auf. Dies lässt sich insbesondere durch die Färbung der Fasern in dem Altpapierstoff erkennen.

Altpapierstoff wird als sekundärer Faserstoff (Recycling-Faserstoff/Sekundärrohstoff) grundsätzlich von Holzstoff und Zellulose unterschieden. Holzstoff ist insbesondere eine zusammenfassende Bezeichnung für Faserstoffe, die durch mechanische Zerfaserung aus Holz gewonnen werden. Unter Zellstoff ist insbesondere die beim chemischen Aufschluss von Pflanzenfasern entstehende faserige Masse, die insbesondere vorwiegend aus Zellulose besteht, zu verstehen.

Vorzugsweise beträgt der Anteil des Holzfasermaterials wenigstens 20 Gew.-%, 30 Gew.-%, 40 Gew.-%, 50 Gew.-%, 60 Gew.-%, 70 Gew.-%, 80 Gew.-%, 90 Gew.-%, 95 Gew.-% oder 99 Gew.-%, bezogen auf das Gesamtgewicht des Fasermaterials, insbesondere Pflanzenfasermaterials.

Es kann vorgesehen sein, dass das Verbundmaterial zusätzlich zum Flammschutzmittel zumindest ein Additiv umfasst. Es kann vorgesehen sein, dass das Additiv in einer Menge von mindestens 1 Gew.-%, 2 Gew.-%, 5 Gew.-%, 10 Gew.-%, 15 Gew.-%, 20 Gew.-%, 23 Gew.-% oder 25 Gew.-% und/oder von höchstens 35 Gew.-%, 30 Gew.-%, 28 Gew.-%, 25 Gew.-%, 23 Gew.-% oder 20 Gew.-%, bezogen auf das Gesamtgewicht des Verbundmaterials, umfasst ist. Insbesondere kann das Additiv in einer Menge zwischen 5 Gew.-% und 35 Gew.%, vorzugsweise zwischen 10 Gew.-% und 30 Gew.-%, besonders bevorzugt zwischen 13 Gew.-% und 25 Gew.-%, bezogen auf das Gesamtgewicht des Verbundmaterials, umfasst sein.

Das Additiv kann ausgewählt sein aus einem anorganischen Salz, einem Konservierungsmittel, einem Farbmittel, einem Gleitmittel, einem Weichmacher, einem Fettungsmittel, einem Gerbstoff, einem Nachgerbstoff, einem Flockungsmittel, einem Fixiermittel, einem Entwässerungshilfsmittel, einem Nassfestmittel, einem Füllstoff oder Mischungen von zwei oder mehr davon.

Insbesondere kann vorgesehen sein, dass das anorganische Salz Aluminiumsulfat ist. Es kann hierbei vorgesehen sein, dass das Gewichtsverhältnis von Fasermaterial zu anorganischem Salz eines ist, das ausgewählt ist aus der Gruppe, bestehend aus 2:1 bis 12:1; 3:1 bis 10:1; 5:1 bis 8:1; 6:1 bis 7:1; insbesondere etwa 6,6:1.

Alternativ oder zusätzlich kann vorgesehen sein, dass das Verbundmaterial zumindest ein Additiv umfasst, das ausgewählt ist aus der Gruppe, bestehend aus einem Fettungsmittel, insbesondere einem oder mehreren Triglyceridestern mit langkettigen (> 10 Kohlenstoffatome) gesättigten und/oder einfach oder mehrfach ungesättigten Fettsäuren, wobei die Triglyceridester sowohl pflanzlicher oder tierischer Herkunft sein können, und/oder sulfatierter natürlicher Öle. Es kann hierbei vorgesehen sein, dass das Gewichtsverhältnis von Fasermaterial zu Fettungsmittel eines ist, das ausgewählt ist aus der Gruppe, bestehend aus 2:1 bis 15:1; 3:1 bis 10:1; 4:1 bis 8:1; 5:1 bis 6:1; insbesondere etwa 5,6:1.

Beispielsweise dann, wenn das Fasermaterial Lederfasern umfasst oder aus diesen besteht, kann vorgesehen sein, dass der Gerbstoff oder Nachgerbstoff ein als (Nach-) Gerbstoff-geeignetes Pflanzenextrakt ist, beispielsweise ein Quebracho-Extrakt ist. Es kann hierbei vorgesehen sein, dass das Gewichtsverhältnis von Fasermaterial zu (Nach)gerbstoff eines ist, das ausgewählt ist aus der Gruppe, bestehend aus 2:1 bis 12:1; 3:1 bis 10:1; 4:1 bis 9:1; 5:1 bis 8:1; 6:1 bis 7:1; insbesondere etwa 6,7:1; beispielsweise etwa 6,66:1.

Es kann vorgesehen sein, dass ein Gemisch von Additiven in dem Verbundmaterial umfasst ist, wobei das Gemisch von Additiven einen Gerbstoff, ein Fettungsmittel und/oder ein anorganisches Salz umfasst, etwa in einer Menge von zumindest 90 Gew.-%, bezogen auf das Gesamtgewicht des Gemischs von Additiven, umfasst, vorzugsweise (im Wesentlichen) aus diesen besteht.

Es kann ferner vorgesehen sein, bevorzugt beim Einsatz von Lederfasern, dass das Verbundmaterial, insbesondere das Gemisch von Additiven, ein Farbmittel aufweist, wobei das Gewichtsverhältnis von Fasermaterial zu Farbmittel ausgewählt ist aus der Gruppe, bestehend 1000:1 bis 5:1; 800:1 bis 10:1; 500:1 bis 15:1; 250:1 bis 20:1.

Ferner hat sich herausgestellt, dass insbesondere der Einsatz von Elastomeren in dem Bindemittel von Vorteil ist. Besonders bevorzugt umfasst, insbesondere besteht das Bindemittel daher aus einem Elastomer, insbesondere aus Kautschuk, insbesondere Naturkautschuk. Durch den Einsatz von Elastomeren kann dem Verbundmaterial insbesondere ein elastisches Verhalten verliehen werden. Dies ist insbesondere bei Ausführungsformen, wie Hinterkappen und Taschen von Vorteil, bei denen gewünscht ist, dass Sie nach einer Verformung wieder in den ursprünglichen Zustand zurückkehren. Das Maß an Elastizität, das bei derartigen Anwendungen gefordert wird kann insbesondere als sprungelastisch bezeichnet werden. Bei dem Einsatz des Verbundmaterials für Beschichtungen kann eine zu hohe Elastizität jedoch zu Problemen bei dem Verarbeiten des Verbundmaterials an scharfen Kanten führen. An diesen kann ein zu elastisches Verbundmaterial zurückspringen, sodass kein enger Verlauf des Verbundmaterials entlang der Kante gewährleistet werden kann. Es wurde erkannt, dass dieses Problem durch die Zugabe eines Weichmachers, d.h. durch die Verwendung eines Weichmachers als Additiv, gelöst werden kann. Vorzugsweise wird als Weichmacher ein Fettungsmittel, insbesondere in Art und/oder Menge wie zuvor beschrieben, eingesetzt.

Insbesondere beim Einsatz des Verbundmaterials für Beschichtungen, wie Ummantelungen, Kaschierungen und/oder Belegen, wurde es als vorteilhaft erkannt, einen Weichmacher einzusetzen. Dadurch kann ein knetartiges Verformungsverhalten bereitgestellt werden, wodurch das Verbundmaterial eng entlang von scharfen Kanten verlaufen kann. Ein derartiges elastisches Verhalten kann insbesondere als elastoplastisch bezeichnet werden. Dadurch können weitere Einsatzgebiete des Verbundmaterials erschlossen werden.

Als Farbmittel kann beispielsweise ein schwarzes Farbmittel, etwa eine Rußpigmentdispersion, oder ein Farbstoff, beispielsweise ein gelber oder ein oranger Farbstoff, vorgesehen sein. Als besonders bevorzugt hat sich die Kombination von Blähgraphit mit schwarzer Farbe, insbesondere mit einer Rußpigmentdispersion, herausgestellt, da diese zu einem besonders starken Glitzern von aus dem Verbundmaterial hergestellten Erzeugnissen führt.

Insbesondere dann, wenn das Fasermaterial Papierfasermaterial umfasst oder aus diesen besteht, kann vorgesehen sein, dass das Verbundmaterial zumindest ein Additiv umfasst, das ausgewählt ist aus der Gruppe, bestehend aus einem Flockungsmittel, einem Fixiermittel, einem Entwässerungshilfsmittel, einem Nassfestmittel und einem Füllstoff.

Gemäß einem weiteren Aspekt der vorliegenden Erfindung, der mit den vorhergehenden Aspekten und beispielhaften Ausführungen kombinierbar ist, ist ein flächiges, insbesondere bahnförmiges, Erzeugnis bereitgestellt, welches ein Verbundmaterial gemäß einem der zuvor beschriebenen Aspekte beziehungsweise einer der zuvor beschriebenen beispielhaften Ausführungen aufweist. Insbesondere ist das bahnförmige, flächige Erzeugnis aus einem insbesondere erfindungsgemäßen Verbundmaterial gemäß einer der zuvor beschriebenen Ausführungen hergestellt.

Vorzugsweise beträgt der Anteil des Verbundmaterials in dem Erzeugnis wenigstens 20 Gew.-%, 30 Gew.-%, 40 Gew.-%, 50 Gew.-%, 60 Gew.-%, 70 Gew.-%, 80 Gew.-%, 90 Gew.-%, 95 Gew.-%, 99 Gew.-% oder 100 Gew.-% des Erzeugnisses.

Unter einem flächigen Erzeugnis ist insbesondere ein Erzeugnis zu verstehen, dessen Längsstreckung und Breitenerstreckung deutlich größer ist als dessen Höhenerstreckung. Unter deutlich größer ist insbesondere zu verstehen, dass die Längserstreckung und/oder die Breitenerstreckung um wenigstens das dreifache, fünffache, zehnfache, zwanzigfache, dreißigfache oder fünfzigfache größer ist als die Breitenerstreckung. Insbesondere definieren die Längserstreckung und die Breitenerstreckung des flächigen Erzeugnisses eine planare Oberfläche des Erzeugnisses, die gebogen oder gerade sein kann. Insbesondere kann das flächige Erzeugnis ein bahnförmiges Erzeugnis sein. Unter einem bahnförmigen Erzeugnis ist insbesondere ein flächiges Erzeugnis zu verstehen, dessen Längserstreckung größer, insbesondere wenigstens doppelt so groß, dreifach so groß, fünffach so groß oder zehnfach so groß, ist als dessen Breitenerstreckung. Die Längserstreckung des bahnförmigen Erzeugnisses kann auch als Bahnerstreckung bezeichnet werden. Die Bahnerstreckung kann insbesondere endlos sein. Insbesondere kann ein bahnförmiges Erzeugnis auf eine Rolle gewickelt sein. Alternativ kann ein bahnförmiges Erzeugnis in Platten geschnitten werden. Insbesondere kann das Erzeugnis eine Faserbahn sein. Unter einer Faserbahn ist insbesondere ein Erzeugnis zu verstehen, das an sich gegenüberliegenden Oberflächen, insbesondere der sich gegenüberliegenden planaren Oberflächen und/oder sich gegenüberliegender Kanten, Fasermaterial aufweist. Insbesondere ist unter einer Faserbahn ein Erzeugnis zu verstehen, das von Fasermaterial durchsetzt ist und/oder in dem das Fasermaterial homogen verteilt ist. Unter "durchsetzt" ist insbesondere zu verstehen, dass sich das Fasermaterial entlang der gesamten Dicke, Länge und/oder Breite des Erzeugnisses verteilt, insbesondere homogen verteilt.

Die Höhenerstreckung des flächigen Erzeugnisses kann auch als Stärke bezeichnet werden. Vorzugsweise umfasst das flächige Erzeugnis eine Stärke zwischen 0,2 mm und 7 mm, besonders bevorzugt zwischen 0,3 mm und 5 mm, insbesondere zwischen 0,5 mm und 3 mm. Alternativ oder zusätzlich weist das Erzeugnis eine Stärke von wenigstens 0,3 mm, 0,5 mm oder 1 mm und/oder von höchstens 10 mm, 8 mm, 7 mm, 6 mm, 5 mm, 4 mm oder 3 mm auf.

Vorzugsweise weist das Erzeugnis bei der Verwendung als Beschichtung, insbesondere von Paneelen, oder als Belag, insbesondere Tapete, eine Stärke zwischen 0,2 mm und 5 mm, insbesondere 0,3 mm und 3 mm, besonders bevorzugt zwischen 0,5 mm und 1 mm auf. Alternativ dazu weist das Erzeugnis insbesondere bei der Verwendung zur Herstellung von Überzugsmaterial, insbesondere von Kissenbezügen, Sitzbezügen, Abdeckungen von Sitzrückschalen und Modeaccessoires insbesondere eine Stärke zwischen 0,5 mm und 2 mm, vorzugsweise zwischen 0,8 mm und 1,4 mm auf. Alternativ dazu weist das Erzeugnis insbesondere bei dessen Verwendung für Hinterkappen eine Stärke zwischen 0,5 mm und 3 mm, vorzugsweise zwischen 0,8 mm und 2,5 mm auf. Bei Lauf- und Brandsohlen weist das Erzeugnis insbesondere eine Stärke zwischen 1,5 mm und 5 mm, vorzugsweise zwischen 1,8 mm und 4 mm, auf. Bei Rahmen und Absätzen weist das Erzeugnis insbesondere eine Stärke zwischen 1 mm und 8 mm, vorzugsweise zwischen 2 mm und 7 mm auf. Bei Wandelementen, wie Raumtrennern, weist das Erzeugnis insbesondere eine Stärke zwischen 2 mm und 8 mm, vorzugsweise zwischen 3 mm und 7 mm, zwischen 4 mm und 7 mm, zwischen 5 mm und 7 mm oder zwischen 6 mm und 7 mm, auf.

Vorzugsweise ist das Erzeugnis ausgewählt aus einem aus der Gruppe bestehend aus Erzeugnissen mit einer Stärke von etwa 0,5 mm und einer gemäß DIN 53121 gemessenen Biegekraft von weniger als 250 mN, einer Stärke von etwa 1,0 mm und einer gemäß DIN 53121 gemessenen Biegekraft von weniger als 1100 mN, einer Stärke von etwa 1,5 mm und einer gemäß DIN 53121 gemessenen Biegekraft von weniger als 3400 mN, einer Stärke von etwa 2,0 mm und einer gemäß DIN 53121 gemessenen Biegekraft von weniger als 7100 mN, einer Stärke von etwa 3,0 mm und einer gemäß DIN 53121 gemessenen Biegekraft von weniger als 18000 mN, einer Stärke von etwa 4,0 mm und einer gemäß DIN 53121 gemessenen Biegekraft von weniger als 31000 mN, einer Stärke von etwa 5,0 mm und einer gemäß DIN 53121 gemessenen Biegekraft von weniger als 41000 mN, einer Stärke von etwa 6,0 mm und einer gemäß DIN 53121 gemessenen Biegekraft von weniger als 50000 mN oder einer Stärke von etwa 7,0 mm und einer gemäß DIN 53121 gemessenen Biegekraft von weniger als 60000 mN. Die Biegekraft wird insbesondere bei folgenden Messbedingungen ermittelt: Biegewinkel 7°; Biegegeschwindigkeit 6,0 °/s; Vorkraft 0,02 N; Biegelänge 10,0 mm; Probenbreite 30,0 mm. Die gemessene Biegekraft beträgt jeweils vorzugsweise wenigstens 30 %, 40 %, 50 %, 55 %, 60 % oder 65 % des zuvor genannten Maximalwertes. Unter "etwa" ist insbesondere eine Stärke von ± 0,05 mm, ± 0,1 mm, ± 0,15 mm, ± 0,25 mm, ± 0,3 mm, ± 0,4 mm oder ± 0,5 mm der angegebenen Stärke zu verstehen. Es hat sich herausgestellt, dass die genannte Biegsamkeit in Abhängigkeit der Plattenstärke für die zuvor genannten Einsatzgebiete von Vorteil ist, insbesondere einen guten Kompromiss aus ausreichender Biegsamkeit für Lagerung, Transport und Verarbeitung einerseits und einen ausreichenden Widerstand gegen Verbiegung im Nutzungszustand andererseits darstellen.

In einer bevorzugten Ausführung ist das Erzeugnis von dem Flammschutzmittel durchsetzt, insbesondere gleichmäßig durchsetzt, insbesondere im Wesentlichen homogen in dem Verbundmaterial verteilt. Unter durchsetzt ist insbesondere zu verstehen, dass das Flammschutzmittel im Wesentlichen homogen in dem Verbundmaterial und/oder dem Erzeugnis verteilt ist. Im Gegensatz zu Erzeugnissen, bei denen das Flammschutzmittel, lediglich auf die Oberfläche des Erzeugnisses aufgetragen wird, wird dadurch sichergestellt, dass auch an den Schnittflächen des Erzeugnisses, das durch das Blähgraphit bereitgestellte Glänzen sichtbar ist. Ferner wird erreicht, dass der Flammschutz unabhängig von der Ausrichtung des Erzeugnisses bereitgestellt werden kann. Insbesondere können so zum Beispiel beidseitig verwendbare Tapeten aus dem Verbundmaterial gebildet werden, die, unabhängig von der im angebrachten Zustand dem Raum zugewandten Seite, gleichermaßen einen Flammschutz bereitstellen. Alternativ oder zusätzlich kann das Erzeugnis ein Raumteiler sein, der von dem Flammschutzmittel durchsetzt ist, sodass das Flammschutzmittel an den, insbesondere beiden, dem Raum zugewandten Seiten des Raumteiles einen Flammschutz bereitstellt und/oder, insbesondere beim Einsatz von Blähgraphit, eine glitzernde Oberfläche aufweist.

Vorzugsweise weist wenigstens eine Oberfläche des Erzeugnisses eine Beschichtung auf. Insbesondere ist die Beschichtung eine Farbschicht und/oder eine Schutzschicht, die insbesondere Polyurethan oder Polyacrylat aufweist. Alternativ oder zusätzlich ist die Oberfläche geprägt. Durch derartige Beschichtungen kann insbesondere die Oberfläche des Erzeugnisses veredelt werden, was dessen Anwendungsgebiete nochmals deutlich erweitert. Insbesondere kann beispielsweise durch eine Marmorierung der Oberfläche eine lederähnliche Optik erzeugt werden.

Die Erfindung betrifft ferner die Verwendung des erfindungsgemäßen Verbundmaterials oder des zuvor beschriebenen Erzeugnisses zur
- Beschichtung, insbesondere Ummantelung oder Kaschierung, insbesondere von
   - Paneelen, wie Wandpaneelen, Bodenpaneelen, Deckenpaneelen oder Fensterrahmenpaneelen, insbesondere im Bereich von Fahrzeuginnenräumen, Wohnräumen und Gewerberäumen, oder von
   - Einrichtungs- und Gebrauchsgegenständen, wie Möbeln, Dekorationen, Elektrogeräten und Handtaschen, insbesondere in der Modeindustrie, und/oder
- zur Herstellung von
   - Belägen, wie Wandbelägen, insbesondere Tapeten, Bodenbelägen, Deckenbelägen, Fensterbelägen oder Türseitenverkleidungen insbesondere im Bereich von Fahrzeuginnenräumen, Wohnräumen und Gewerberäumen, von
   - Wandelementen, wie Raumtrennern, insbesondere im Bereich von Fahrzeuginnenräumen, Wohnräumen und Gewerberäumen, von
   - Überzugsmaterial, wie Kissenbezüge, Sitzbezüge oder Abdeckungen, insbesondere von Sitzrückenschalen, insbesondere im Fahrzeuginnenbereich, von
   - Schuhkomponenten, insbesondere Hinterkappen, Absätzen, Lauf- und Brandsohlen, und/oder von
   - Modeaccessoires, Produkte zur Ausstattung von Verkehrsmitteln oder Bauprodukten.

Ferner betrifft die Erfindung für die zuvor beschriebenen Verwendungen hergestellte Erzeugnisse und/oder Beschichtungen.

Insbesondere bei Beschichtungen, Belägen und/oder Überzugsmaterial, insbesondere von Einrichtungs-und Gebrauchsgegenständen, kann die Prägung der Oberfläche, zur Erzeugung einer lederähnlichen Optik, insbesondere in der Modeindustrie, vorteilhaft sein. Alternativ oder zusätzlich kann eine Textil-Prägung eingesetzt werden, die dem Erzeugnis insbesondere eine textilähnliche Optik, beispielsweise die eines Gewebes, verleiht. Alternativ oder zusätzlich kann eine technische Prägung, beispielsweise eine Carbonprägung, eingesetzt werden, die dem Erzeugnis die Optik eines Hochleistungsmaterials, wie Carbon, verleiht. Im Gegensatz dazu kann insbesondere bei der Ummantelung oder Kaschierung in Gewerberäumen das Verzichten auf eine Prägung sinnvoll sein, um den durch den Einsatz der Pflanzenfasern erzeugten "veganen", also pflanzenbasierten, Eindruck nicht zu beeinträchtigen.

Gemäß einem weiteren Aspekt der vorliegenden Erfindung, der mit den vorhergehenden Aspekten und beispielhaften Ausführungen kombinierbar ist, ist ein Verfahren zum Herstellen eines insbesondere erfindungsgemäßen und/oder gemäß einem der zuvor beschriebenen beispielhaften Ausführungen ausgebildeten Verbundmaterials bereitgestellt. Gemäß dem erfindungsgemäßen Verfahren wird ein Gemisch umfassend ein Fasermaterial, ein Bindemittel und ein Flammschutzmittel hergestellt. Das Verbundmaterial kann entsprechend einem der zuvor beschriebenen Aspekte hergestellt werden.

Das Gemisch kann beispielweise in Form einer wässrigen Dispersion vorliegen.

Gemäß einer weiteren beispielhaften Ausführung kann das Flammschutzmittel im Wesentlichen homogen in dem Gemisch verteilt sein.

Ein weiterer Aspekt der Erfindung betrifft ein Verfahren zur Herstellung eines Verbundmaterials oder eines flächigen Erzeugnisses, wobei das Verbundmaterial und das Erzeugnis wie zuvor beschrieben ausgebildet sein kann. Das Verfahren umfasst die Schritte:
a) Bereitstellen eines Fasermaterials, das vorzugsweise Lederfasermaterial umfasst;
b) Bereitstellen eines Bindemittels, das vorzugsweise Naturkautschuk umfasst;
c) Bereitstellen eines Flammschutzmittels;
d) Vermengen des Bindemittels, des Fasermaterials, des Flammschutzmittels und eines Fluids, insbesondere Wasser, zu einem Gemisch, insbesondere Faserbrei; und
e) Trocknen des Gemisches, um das Verbundmetarial zu erhalten.

In Schritt a) wird bevorzugt Lederfasermaterial bereitgestellt. Vorzugsweise wird das Lederfasermaterial wie im Zusammenhang mit dem zuvor beschriebenen Erzeugnis ausgewählt. Besonders bevorzugt handelt es sich bei dem Ausgangsstoff Lederfasermaterial um nicht zugerichtetes Lederfasermaterial, insbesondere um aus Crustleder gewonnenes Lederfasermaterial. Insbesondere handelt es sich um gegerbtes Lederfasermaterial, insbesondere ausgewählt aus einem oder mehreren aus der Gruppe bestehend aus vegetabilem Crustleder, wie Stanzresten und Abschnitten, chromgegerbten Crustleder und aldehydgegerbtem Crustleder. Besonders bevorzugt wird für das Lederfasermaterial nicht zugerichtetes, nicht gefärbtes und insbesondere gegerbtes Lederfasermaterial eingesetzt, insbesondere ausgewählt aus einem oder mehreren aus der Gruppe bestehend aus vegetabilem, nicht gefärbtem Crustleder, chromgegerbten, nicht gefärbtem Crustleder, aldehydgegerbtem, nicht gefärbtem Crustleder, Chromfalzspänen, Aldehydfalzspänen und sonstigen Falzspänen. Es hat sich herausgestellt, dass nicht gefärbtes Lederfasermaterial die Farbgestaltung des Verbundmaterials erheblich vereinfacht, sodass größere Gestaltungsspielräume geschaffen werden. Die Erfinder haben allerdings auch erkannt, dass beim in Kauf nehmen gewisser Einschränkungen bei der Farbgestaltung auch nicht zugerichtetes, gefärbtes Lederfasermaterial und sogar zugerichtetes Lederfasermaterial, insbesondere Fasermaterial aus durchgefärbtem Fertigleder, beispielsweise von Stanzresten und Abschnitte, eingesetzt werden kann. Die zuvor beschriebenen Ledersekundärstoffe können insbesondere auf Grund ihrer Färbung und/oder der für die Gerbung eingesetzten Chemikalien nur bedingt wiederverwendet werden. Durch die vorliegende Erfindung wurden weitere Optionen für deren Wiederverwertung geschaffen und somit zumindest teilweise deren Entsorgungsproblem gelöst.

In Schritt a) wird als Fasermaterial bevorzugt Lederfasermaterial, insbesondere ausschließlich Lederfasermaterial bereitgestellt. Es kann aber auch eine Mischung aus Lederfasermaterial und Pflanzenfasermaterial oder ausschließlich Pflanzenfasermaterial bereitgestellt werden.

Insbesondere kann Schritt a) das Bereitstellen von Pflanzenfasermaterial der Ordnung Poales, das Bereitstellen von rezykliertem Fasermaterial, das Bereitstellen von Holzfasermaterial, das Bereitstellen von Pflanzenfasermaterial und/oder das Bereitstellen von Pflanzenfasermaterial und einem Verstärkungsfasermaterial aufweisen. Insbesondere kann das Fasermaterial, insbesondere das Lederfasermaterial, mit dem zuvor beschriebenen Hauptfaseranteil, Kurzfaseranteil und/oder Langfaseranteil bereitgestellt werden. Insbesondere kann Schritt a) das Bereitstellen von Kämmlingen, Grundbaumwolle, Kardenrückständen, Schlichtfasern, Reißfasern, Papierfasermaterial und/oder Spelzfasermaterial, insbesondere in Form von Baumwolle, Holzfasermaterial und/oder Pflanzenfasermaterial der Gattung der Poales oder Leder, umfassen. Bevorzugt werden die Reißfasern aus Textilien gewonnen, die aus Kleidung, insbesondere Jeansstoffen, Bezügen, Polstermöbeln, Vorhängen, Handtüchern, Bettwäsche, Tischdecken und/oder Putz- und Reinigungstüchern ausgewählt sind. Alternativ oder zusätzlich werden als Kämmlinge Baumwollkämmlinge verwendet. Besonders bevorzugt sind die Baumwollkämmlinge gefärbt, insbesondere indigogefärbt. Ferner werden die Baumwollkämmlinge vorzugsweise aus der Weberei von Jeansstoffen gewonnen. Alternativ oder zusätzlich handelt es sich beim Papierfasermaterial um Papierfasermaterial, das aus Papierbehältern, insbesondere aus To-Go-Bechern, insbesondere Kaffeebechern, To-Go-Tellern, Strohhalmen oder ähnlichen Einwegprodukten aus Papier gewonnen werden. Ferner kann es sich alternativ oder zusätzlich beim Papierfasermaterial um aus Papierverpackungen, wie Lebensmittelverpackungen, oder aus Papierblättern, wie Papier aus Zeitungen, Schreibpapier oder Papier aus Büchern, gewonnenes Papierfasermaterial handeln. Insbesondere wird das Papierfasermaterial durch Zerkleinerung derartiger Gegenstände, insbesondere in einer Schneidmühle und/oder in einem Refiner, insbesondere Kegelrefiner oder Scheibenrefiner, in das Papierfasermaterial überführt. Bevorzugt wird Papierfasermaterial der Gruppen 2 bis 5 gemäß DIN EN 643:2014-11. Besonders bevorzugt handelt es sich bei dem Papierfasermaterial um Papierfasermaterial der Gruppe 2 oder 5 gemäß DIN EN 643:2014-11. Insbesondere kann Papierfasermaterial der Klassen 2.10.00, 2.11.00, 5.05.00, 5.05.01, 5.06.00, 5.06.01, 5.07.00, 5.07.01, 5.14.00 und/oder 5.14.01 gemäß DIN EN 643:2014-11 eingesetzt werden.

Schritt c) kann das Bereitstellen des zuvor beschriebenen Flammschutzmittels umfassen.

Schritt d) kann das Zerkleinern des Fasermaterials auf einen gewünschten Faserlängenbereich, insbesondere wie im Zusammenhang mit dem Hauptfaseranteil, Kurzfaseranteil und/oder Langfaseranteil beschrieben, umfassen. Dabei kann das Zerkleinern insbesondere ein Zerkleinern mittels einer Schneidmühle, insbesondere Feinschneidmühle, und/oder mittels eines Refiners, insbesondere Scheibenrefiners und/oder Kegelrefiners, umfassen. Es hat sich herausgestellt, dass der Einsatz von Pflanzenfasern die notwendige Verarbeitungszeit im Refiner (im Stand der Technik 2 - 10 Stunden) gegenüber Lederfasern reduzieren kann, insbesondere auf 30 bis 50 Minuten.

Für die Zerkleinerung im Refiner kann ein Gewichtsverhältnis von 5 - 10 Gew.-% Fasermaterial, insbesondere Lederfasermaterial, zu 90 - 95 Gew.-% Wasser zielführend sein. Schritt d) kann das Vermengen des Bindemittels und/oder der Brandschutzmittel mit dem Fasermaterial vor, nach oder während dem Zerkleinern umfassen. Ferner kann Schritt d) das Vermengen des Bindemittels und/oder des Brandschutzmittels mit dem Fasermaterial vor, nach oder während dem Zerkleinern umfassen.

Insbesondere umfasst Schritt d) das Vermengen des Bindemittels, des Fasermaterials, des Flammschutzmittels und von Fluid zu einem Gemisch. Sofern vorab das Fasermaterial und/oder das Flammschutzmittel im Refiner zerkleinert wurde, kann das Fasermaterial und/oder das Flammschutzmittel bereits mit Wasser vermengt sein, sodass dem Gemisch nur noch das Bindemittel zugefügt werden muss.

In einer beispielhaften Ausführung kann ein Aromaträger beigemischt werden. Insbesondere kann der Aromaträger in Form eines ätherischen Öls oder in Form von Rückständen, insbesondere von Pressrückständen, Extraktionsrückstände und/oder Destillationsrückstände, bereitgestellt werden. Besonders bevorzugt wird der Aromaträger in Form von Kaffeesatz, Öl-Pressrückständen und/oder Tee-Extraktionsrückständen bereitgestellt. Insbesondere beim Einsatz von Kaffeesatz als Aromaträger kann dieser ohne Vorbehandlung dem Fasermaterial zugeführt werden. Vorzugsweise werden Kaffeesatz und Fasermaterial mit Wasser vermengt und gemeinsam, insbesondere mittels Refiner, zerkleinert. Auch beim Einsatz von Aromaträgern in Form von Öl-Pressrückständen und/oder Tee- Extraktionsrückständen, kann der Aromaträger in der Regel zumindest ohne vorgelagerten Zerkleinerungsschritt direkt mit dem Fasermaterial vermengt und verarbeitet werden. Beispielsweise wird der Aromaträger in Schritt d) mit in den Faserbrei vermengt und/oder während oder nach dem Schritt e) auf das Verbundmaterial aufgetragen.

Schritt d) kann ferner das Zugeben zumindest eines Additivs umfassen, das eines oder mehrere der im Vorangehenden im Detail beschriebenen Additive sein kann. Das Vermischen gemäß Schritt d) kann insbesondere in einer Mischvorrichtung, wie einer Bütte, erfolgen. Das Gewichtsverhältnis von Fasermaterial, insbesondere Lederfasermaterial, und Wasser kann hierbei eines sein, das ausgewählt ist aus der Gruppe, bestehend aus 20:1000 bis 200:1000; 30:1000 bis 150:1000 oder 50:1000 bis 100:1000, beispielsweise 70:1000.

Das Gemisch, das in Schritt d) erhalten wird, kann ein Faserbrei sein, der durch gemeinsames Mahlen des Fasermaterials und des Wassers, beispielsweise mittels eines Scheibenrefiners oder Kegelrefiners, erhalten werden kann. Der Faserbrei kann auch als Stoffbrei bezeichnet werden.

Das in Schritt d) erhaltene Gemisch wird mit dem Bindemittel und optional mit einem oder mehreren der im Vorangehenden beschriebenen Additive versetzt, beispielsweise chargenweise versetzt.

Es kann vorgesehen sein, dass ein Gewichtsverhältnis von Fasermaterial zu Bindemittel in einem Bereich zwischen 1:1 bis 3:1, besonders bevorzugt zwischen 1:1 bis 2.5:1, insbesondere 2:1 bis 1,1:1, ist. Als Bindemittel kann eines oder mehrere der im Vorangehenden im Detail beschriebenen Bindemittel, etwa ein Bindemittel, das Naturkautschuk umfasst, verwendet werden. Es kann vorgesehen sein, dass das Bindemittel in Form einer Suspension, Dispersion, Emulsion etc. zugegeben wird, beispielsweise in Form einer Emulsion, umfassend das Bindemittel und ein geeignetes Emulsionsmittel, mit einem Feststoffgehalt von 40 bis 60 Gew.-%, insbesondere 43.5 bis 55 Gew.-%, beispielsweise 43.5 Gew.-% bis 44.5 Gew.-%.

Es kann vorgesehen sein, dass das Fettungsmittel, eines ist (oder ein solches umfasst, das ausgewählt ist aus der Gruppe, bestehend aus einem oder mehreren Triglyceridestern mit langkettigen (> 10 Kohlenstoffatome) gesättigten und/oder einfach oder mehrfach ungesättigten Fettsäuren, wobei die Triglyceridester sowohl pflanzlicher oder tierischer Herkunft sein können, und/oder sulfatierter natürlicher Öle. Es kann hierbei vorgesehen sein, dass das Gewichtsverhältnis von Fasermaterial zu Fettungsmittel eines ist, das ausgewählt ist aus der Gruppe, bestehend aus 2:1 bis 15:1; 3:1 bis 10:1; 4:1 bis 8:1; 5:1 bis 6:1; insbesondere etwa 5,6:1.

Es kann vorgesehen sein, dass der Gerbstoff ein vegetabiler Gerbstoff, etwa ein als (Nach-) Gerbstoffgeeignetes Pflanzenextrakt ist, beispielsweise ein Quebracho-Extrakt, ist. Es kann hierbei vorgesehen sein, dass das Gewichtsverhältnis von Fasermaterial zu Gerbstoff eines ist, das aus der Gruppe ausgewählt ist, bestehend aus 2:1 bis 12:1; 3:1 bis 10:1; 4:1 bis 9:1; 5:1 bis 8:1; 6:1 bis 7:1; insbesondere etwa 6,7:1; beispielsweise etwa 6,66:1.

Es kann vorgesehen sein, dass das anorganische Salz Aluminiumsulfat ist. Es kann hierbei vorgesehen sein, dass das Gewichtsverhältnis von Fasermaterial zu anorganischem Salz eines ist, das ausgewählt ist aus der Gruppe, bestehend aus 2:1 bis 12:1; 3:1 bis 10:1; 5:1 bis 8:1; 6:1 bis 7:1; insbesondere etwa 6,6:1.

Es kann vorgesehen sein, dass das in Schritt d) erhaltene Gemisch vor dem Schritt e) für einen Zeitraum von etwa zwei Stunden gerührt wird.

Das Trocknen des in Schritt d) erhaltenen Gemischs, d.h. Schritt e) des Verfahrens, kann einen Schritt des Entwässerns umfassen. Das Entwässern kann insbesondere durch Aufbringen des in Schritt d) erhaltenen Gemischs auf ein Siebband durchgeführt werden. Der Entwässerungsprozess kann durch Anlegen eines Vakuums, durch Abpressen und andere geeignete Verfahrensschritte unterstützt werden.

Das Trocknen des in Schritt d) erhaltenen Gemischs, d.h. Schritt e) des Verfahrens, kann einen Trocknungsschritt bei erhöhter Temperatur umfassen, insbesondere einen Trocknungsschritt bei erhöhter Temperatur der dem Entwässern nachgelagert ist. Der Trocknungsschritt bei erhöhter Temperatur kann durch Zufuhr von Warmluft durchgeführt werden, um das zu trocknende Gemisch auf eine Temperatur von beispielsweise 50 bis 100°C, etwa 80 °C, zu erhitzen.

Das Trocknen des Gemischs gemäß Schritt e) umfasst insbesondere ein Trocknen, bis der Wassergehalt des Verbundmaterials derart reduziert ist, dass das Verbundmaterial auf eine Rolle gewickelt, in Platten geschnitten und/oder vor Verderbnis, insbesondere Schimmel, geschützt werden kann. Es hat sich herausgestellt, dass ein Restwassergehalt von 3 bis 20 Gew.-% für die zuvor genannten Faserarten für diese Zwecke zielführend ist. Insbesondere hat sich gezeigt, dass bei Lederfasern ein Restwassergehalt von maximal 15 Gew.-%, insbesondere von maximal 13 oder 12 Gew.-%, das Verbundmaterial vor Verderbnis schützt. Bei Pflanzenfasern, insbesondere bei Baumwolle, hat sich ein Restwassergehalt von maximal 10 Gew.-% als zielführend für den Schutz vor Verderbnis erwiesen.

Vorzugsweise umfasst Schritt e) folgende Unterschritte:
e1) Überführen des Gemischs in einen flächigen, insbesondere bahnförmigen Zustand, und
e2) Trocknen des Gemischs, um ein wickelbares und/oder stapelbares Erzeugnis zu erhalten.

Schritt e1) umfasst vorzugsweise das Fördern, insbesondere mittels Pumpen, des Gemischs auf eine Langsiebentwässerungsmaschine (Foudrinier-Anlage). Schritt e2) umfasst insbesondere wenigstens einen mechanischen (Entwässerung) und/oder einen thermischen (bei erhöhter Temperatur) Trocknungsschritt, insbesondere Entwässerungsschritt. Ein mechanischer Trocknungsschritt kann insbesondere über die Langsiebmaschine erfolgen. Diese umfasst insbesondere ein Endlosförderband mit Durchtrittsöffnung, über die im Faserbrei enthaltenes Fluid, insbesondere Wasser, abtropfen, insbesondere entwässern, kann. Die Langsiebentwässerungsmaschine kann eine Keilpresse aufweisen, mit der über eine sich in Förderrichtung verjüngende Keilform die Stärke des Faserbreis durch Komprimierung verringert und das Wasser ausgepresst wird. Die Langsiebentwässerungsmaschine kann eine Keilpresse aufweisen, mit der über eine sich in Förderrichtung verjüngende Keilform die Stärke des Gemisches durch Komprimierung verringert und das Wasser ausgepresst wird. An die Keilpresse können weitere Pressvorrichtungen anschließen, um das Gemisch weiter zu entwässern. An derartige Pressvorrichtungen können thermische Trockenvorrichtungen anschließen, um das Gemisch weiter zu trocknen, bis das gewünschte wickelbare und/oder stapelbare Erzeugnis vorliegt.

Insbesondere durch eine Abfolge, wonach zunächst eine insbesondere größtmögliche mechanische und anschließend eine thermische Trocknung erfolgt, kann der Energieaufwand für die Trocknung reduziert werden, was die Nachhaltigkeit des Verfahrens steigert.

In einer weiteren Ausführungsform umfasst das Verfahren ferner einen oder mehrere der folgenden Schritte:
f) Auftragen einer Beschichtung, insbesondere Farbschicht und/oder Schutzschicht, insbesondere umfassend Polyurethan oder Polyacrylat, auf wenigstens eine Oberfläche des Erzeugnisses; und/oder
g) Prägen von wenigstens einer Oberfläche des Erzeugnisses; und/oder
h) Bearbeiten des Erzeugnisses mit einer Stollmaschine.

Durch das Auftragen der Beschichtung und/oder der Prägung können die zuvor beschriebenen Vorteile erzielt werden. Durch Bearbeitung mit einer Stollmaschine gemäß Schritt h) kann insbesondere die Weichheit und/oder Flexibilität des entstehenden Verbundmaterials erhöht werden.

Vorzugsweise kann das erfindungsgemäße Verfahren so ausgeführt werden, dass ein erfindungsgemäßes Verbundmaterial oder flächiges Erzeugnis herstellbar ist. Ferner kann das erfindungsgemäße Verbundmaterial und/oder flächige Erzeugnis gemäß so ausgebildet sein, dass es mit dem erfindungsgemäßen Verfahren erzeugt werden kann.

In einer Ausführungsform wird dem Faserbrei, insbesondere in Schritt d), ein Fällungsmittel, insbesondere Aluminiumsulfat oder andere Salze von mehrwertigen Kationen, wie Kalzium und Magnesium, zugeführt.

Zuvor und nachfolgend gemachte Gew.-% Angaben beziehen sich insbesondere auf Gew.-% der Referenzgröße, beispielsweise des Fasermaterials, im getrockneten Zustand. Unter dem getrockneten Zustand ist insbesondere der Zustand des Verbundmaterials nach dem Trocknen zu verstehen, insbesondere mit dem zuvor beschriebenen Restwassergehalt. Alternativ können die Gew.-% Angaben auf sämtliche Bestandteile des Verbundmaterials, abgesehen von Wasser, vor deren Verarbeitung zu Verbundmaterial bezogen sein. So können bei einem Verbundmaterial, das ausschließlich aus Fasermaterial, Bindemittel, Flammschutzmittel und Wasser besteht, Gewichtsangaben bezogen auf das Gesamtgewicht des Verbundmaterials insbesondere dahingehend verstanden werden, dass das Gesamtgewicht des Verbundmaterials aus der Summe des Gewichts des Fasermaterials, des Bindemittels und des Flammschutzmittel, also ohne den Wasseranteil, insbesondere ohne den zuvor beschriebenen Restwassergehalt, gebildet wird.

Bevorzugte Ausgestaltungen sind in den Unteransprüchen angegeben. Im Folgenden soll die Erfindung unter Bezugnahme auf Ausführungsbeispiele im Detail beschrieben werden. Die Erfindung ist jedoch nicht auf diese Ausführungsbeispiele beschränkt, wobei einzelne Merkmale der Ausführungsbeispiele zusammen mit anderen Merkmalen oder Merkmalen der vorangehenden allgemeinen Offenbarung der Erfindung der Verwirklichung der Erfindung dienen können.

### Beispiel 1:

Vegetabilleder, Aldehydfalzspäne und Chromfalzspäne wurden jeweils im trockenen Zustand zerkleinert, um ein entsprechendes Fasermaterial zu erhalten. Anschließend wurde 198 kg Fasermaterial aus Vegetabilleder, 79 kg Fasermaterial aus Aldehydfalzspänen, 467 kg aus Chromfalzspänen und 47 kg Lederfaserstoffschleifstaub (fällt beim Schleifen der Oberflächen von Lederfaserprodukten als Produktionsrückstand an) in einer Bütte mit 11000 L Wasser vermengt und anschließend mittels eines Scheibenrefiners zu einem Faserbrei vermahlen. Eine Stichprobe des Faserbreis, die mittels Dynamischer Bildanalyse gemäß ISO 13322-2:2006 gemessen wurde wies folgende Faserlängenverteilung auf:

| | | | | | | | | |
|---|---|---|---|---|---|---|---|---|
| Faserlängenbereich [mm] | < 0,1 | 0,1 0,2 | 0,2 0,5 | 0,5 1,0 | 1,0 - 1,5 | 1,5 2,0 | 2,0 3,0 | > 3,0 |
| Volumenanteil [%] | 15 | 10 | 25 | 20 | 10 | 15 | 4,5 | 0,5 |

Der so erhaltene Faserbrei wurde mit 38 kg einer Rußpigmentdispersion (Euronylschwarz HS 20192, Fa. Scholz), 408 kg Bindemittel (Latexaufbereitung, Full Ammonia Latex "Standard Malaysian/Vietnamese Rubber" 60% DRC gemäß ISO 2004), 142 kg Fettungsmittel (Polyol CT 688, Smit&Zoon), 119 kg vegetabilem Gerbstoff (Quebracho-Extrakt, Otto Dille), 120 kg Aluminiumsulfat als Koagulationsmittel und 150 kg Blähgraphit als Flammschutzmittel (90 Gew.-% Kohlenstoff, Expansion von 250 cm³/g, Partikelgröße: 80 % > 300 µm, ES 250 B5, Kropfmühl) versetzt. Anschließend wurde der Faserbrei auf einer Langsiebentwässerungsmaschine entwässert und anschließend in einer Keilpressmaschine weiter entwässert. Anschließend wurde der Faserbrei in einem Trockenkanal unter Zufuhr von Warmluft bei 80°C getrocknet, bis ein wickelbares und stapelbares flächiges Erzeugnis mit einer Stärke von 1 mm bereitgestellt war.

Mittels Kleinbrenntest in Anlehnung an die DIN 4102 (Beflammungszeit von 15 Sekunden mit Kanten- und Flächenbeflammung) konnte für Beispiel 1 die Brandschutzklasse B2 nachgewiesen werden. Erste Tests mit einem Beispiel 1b, das wie Beispiel 1 hergestellt wurde mit der einzigen Ausnahme, dass 300 kg Blähgraphit anstelle von 150 kg Blähgraphit als Brandschutzmittel eingesetzt wurde, deuten darauf hin, dass durch Erhöhung des Gewichtsanteils von Blähgraphit auf etwa 15 Gew.-%, bezogen auf das Gesamtgewicht des Verbundmaterials, sogar Brandschutzklasse B1 erreichbar ist. Zur Testung der Eignung für Brandschutzklasse B1 wurde die Beflammungszeit von Beispiel 1b auf 30 Sekunden mit Kanten- und Flächenbeflammung erhöht. Das Erfüllen des Tests mit 30 Sekunden Beflammungszeit ist die Voraussetzung für die Klassifizierung in einem höheren Brandtest für z.B. Brandklasse B1 im Single-Burning-Item Test (SBI). Des Weiteren konnte mit Beispiel 1 gegenüber einem Vergleichsbeispiel, das wie Beispiel 1 hergestellt wurde, mit der einzigen Ausnahme, dass kein Brandschutzmittel verwendet wurde, die Nachglimmzeit um mindestens 50 % verkürzt werden. Die Nachglimmzeiten wurde bei dem in Anlehnung an die DIN 4102 (Kleinbrennertest) durchgeführten Tests zur Beurteilung der Brandklasse B2 mit einer Beflammungszeit von 15 Sekunden mit Kantenbeflammung beobachtet. Die Nachglimmzeit erhöht sich bei längerer Beflammungszeit. So ist die beobachtete Nachglimmzeit bei einer Beflammungszeit von 30 Sekunden im Kleinbrennertest höher, jedoch immer noch niedriger als beim Vergleichsbeispiel.

Das Erzeugnis war schwarz durchfärbt und glitzerte deutlich an den Stellen, an denen das Blähgraphit an der Oberfläche war oder oberflächennah verlief.

Unter den Prüfbedingungen gemäß DIN 53121 (Biegewinkel 7°; Biegegeschwindigkeit 6,0°/s; Vorkraft 0,02 N; Biegelänge 10,0 mm; Probenbreite 30,0 mm) wurde bei Beispiel 1 eine Biegekraft von 743 mN gemessen. Des Weiteren wurde für Beispiel 1 bei einer Temperatur von 40°C und einer Luftfeuchtigkeit von 80% eine Wasserdampfspeicherfähigkeit von 15 Gew.-% nachgewiesen.

### Beispiele 2 bis 9:

Die Beispiele 2 bis 9 wurden wie Beispiel 1 durchgeführt, mit der einzigen Ausnahme, dass der Faserbrei in flächige Erzeugnisse mit einer Stärke von 0,5 mm (Beispiel 2), 1,5 mm (Beispiel 3), 2,0 mm (Beispiel 4), 3,0 mm (Beispiel 5), 4,0 mm (Beispiel 6), 5,0 mm (Beispiel 7), 6,0 mm (Beispiel 8) und 7,0 mm (Beispiel 9) überführt wurde. Unter den gleichen Prüfbedingungen wie bei Beispiel 1 wurde für Beispiel 2 eine Biegekraft von weniger als 250 mN, für Beispiel 3 eine Biegekraft von weniger als 3400 mN, für Beispiel 4 eine Biegekraft von weniger als 7100 mN, für Beispiel 5 eine Biegekraft von weniger als 18000 mN, für Beispiel 6 eine Biegekraft von weniger als 31000 mN, für Beispiel 7 eine Biegekraft von weniger als 41000 mN, für Beispiel 8 eine Biegekraft von weniger als 50000 mN, und für Beispiel 9 eine Biegekraft von weniger als 60000 mN gemessen.

### Beispiel 10:

Der gleiche Faserbrei, wie in Beispiel 1 wurde mit 3 kg orangen Farbstoff (Acid Orange 7) und 0,4 kg gelbem Farbstoff (Basazolgelb 46L), 389 kg Bindemittel (Latexaufbereitung, Full Ammonia Latex "Standard Malaysian/Vietnamese Rubber" 60% DRC gemäß ISO 2004), 142 kg Fettungsmittel (Polyol CT 688, Smit&Zoon), 119 kg vegetabilem Gerbstoff (Quebracho-Extrakt, Otto Dille), 120 kg Aluminiumsulfat als Koagulationsmittel, 80 kg Blähgraphit als erstes Flammschutzmittel (90 Gew.-% Kohlenstoff, Expansion von 250 cm³/g, Partikelgröße: 80 % > 300 µm, ES 250 B5, Kropfmühl) und 40 kg Roter Phosphor als zweites Flammschutzmittel (Masteret 80450, Italmatch Chemicals) versetzt. Anschließend wurde der Faserbrei, wie für Beispiel 1 beschrieben, in ein flächiges Erzeugnis mit einer Stärke von 1 mm überführt.

Mittels Kleinbrennertest in Anlehnung an die DIN 4102 (Beflammungszeit von 15 Sekunden mit Kanten-und Flächenbeflammung) konnte für Beispiel 10 die Brandschutzklasse B2 nachgewiesen werden. Bei Tests mit einem weiteren Beispiel 10b, das wie Beispiel 10 hergestellt wurde, mit der einzigen Ausnahme, dass lediglich 40 kg Blähgraphit und 20 kg Roter Phosphor eingesetzt wurde, konnte Brandschutzklasse B2 auch noch nachgewiesen werden. Erste Tests mit Beispiel 10 deuten daraufhin, dass sogar Brandschutzklasse B1 erreichbar ist. Zur Testung der Eignung für Brandschutzklasse B1 wurde die Beflammungszeit von Beispiel 10 auf 30 Sekunden mit Kanten- und Flächenbeflammung erhöht. Des Weiteren konnte mit Beispiel 10 gegenüber einem Vergleichsbeispiel, das wie Beispiel 10 hergestellt wurde, mit der einzigen Ausnahme, dass kein Brandschutzmittel verwendet wurde, die Nachglimmzeit um mindestens 75 % verkürzt werden.

Das Erzeugnis war braun durchfärbt und glitzerte an den Stellen, an denen das Blähgraphit an der Oberfläche war oder oberflächennah verlief. Der Glitzereffekt war jedoch deutlich geringer ausgeprägt als bei Beispiel 1. Es scheint, dass dies über den geringeren Anteil an Blähgraphit in Beispiel 10 hinaus am geringeren Kontrast zum Braun anstelle zu schwarz liegt. Insofern hat sich insbesondere die Kombination von Blähgraphit mit schwarzer Farbe, insbesondere mit einer Rußpigmentdispersion, als vorteilhaft erwiesene, um dem Erzeugnis ein besonders ansprechendes Aussehen zu verleihen.

### Beispiele 11 bis 13:

Chromfalzspäne wurden im trockenen Zustand zerkleinert, um ein entsprechendes Fasermaterial zu erhalten. Anschließend wurde 792 kg des aus den Chromfalzspänen gewonnen Fasermaterials in einer Bütte mit 11000 L Wasser vermengt und anschließend mittels eines Scheibenrefiners zu einem Faserbrei vermahlen. Der so erhaltene Faserbrei wurde mit 516 kg Bindemittel (Latexaufbereitung, Full Ammonia Latex "Standard Malaysian/Vietnamese Rubber" 60% DRC gemäß ISO 2004), 142 kg Fettungsmittel (Polyol CT 688, Smit&Zoon), 119 kg vegitablem Gerbstoff (Quebracho-Extrakt, Otto Dille), 120 kg Aluminiumsulfat als Koagulationsmittel,150 kg Blähgraphit als erstes Flammschutzmittel (90 Gew.-% Kohlenstoff, Expansion von 250 cm³/g, Partikelgröße: 80 % > 300 µm, ES 250 B5, Kropfmühl) und 396 kg Aluminiumhydroxid als zweites Flammschutzmittel (Apyral 24, Nabaltec, D50 = 8 µm, 99,7 % Al(OH₃)). Anschließend wurde der Faserbrei, wie für Beispiel 1 beschrieben, in ein flächiges Erzeugnis mit einer Stärke von 1 mm überführt.

Mittels Kleinbrennertest in Anlehnung an die DIN 4102 (Beflammungszeit von 15 Sekunden mit Kanten-und Flächenbeflammung) konnte für Beispiel 11 die Brandschutzklasse B2 nachgewiesen werden. Bei Tests mit einem weiteren Beispiel 11b, das wie Beispiel 11 hergestellt wurde mit der einzigen Ausnahme, dass lediglich 270 kg Aluminiumhydroxid und 110 kg Blähgraphit eingesetzt wurde, konnte Brandschutzklasse B2 auch noch nachgewiesen werden. Erste Tests mit Beispiel 11 deuten darauf hin, dass sogar Brandschutzklasse B1 erreichbar ist. Zur Testung der Eignung für Brandschutzklasse B1 wurde die Beflammungszeit von Beispiel 10 auf 30 Sekunden mit Kanten- und Flächenbeflammung erhöht. Des Weiteren konnte mit Beispiel 11 gegenüber einem Vergleichsbeispiel, das wie Beispiel 11 hergestellt wurde, mit der einzigen Ausnahme, dass kein Brandschutzmittel verwendet wurde, die Nachglimmzeit um mindestens 75 % verkürzt werden.

Das Erzeugnis war grau durchfärbt und glitzerte an den Stellen, an denen das Blähgraphit an der Oberfläche war oder oberflächennah verlief. Der Glitzereffekt war jedoch deutlich geringer ausgeprägt als bei Beispiel 1.

Zwei weitere Beispiele 12 und 13 wurden wie Beispiel 11 durchgeführt, mit der einzigen Ausnahme, dass jeweils ein anderes Aluminiumhydroxid als zweites Flammschutzmittel eingesetzt wurde. Bei Beispiel 12 wurde Martinal ON 310 S (D50 = 9,5 µm, 99,6 % Al(OH₃), Huber/Martinswerk GmbH) eingesetzt. Bei Beispiel 13 wurde Apyral 40 CD, D50 = 1,5 µm, 99,5 % Al(OH₃), Nabaltec) eingesetzt. Die Beispiele 12 und 13 wiesen vergleichbare Eigenschaften, wie Beispiel 11 auf.

Die gemäß der Beispiele 1 bis 13 hergestellten Erzeugnisse konnten in Platten geschnitten und/oder auf Rollen gewickelt werden. Darüber hinaus haben sich die Erzeugnisse als geeignet für die zuvor beschriebenen Einsatzzwecke erwiesen. Insbesondere die Biegsamkeit und Wasserdampfspeicherfähigkeit hat sich diesbezüglich als ausreichend erwiesen. Dank der hervorragenden Biegsamkeit konnten die Erzeugnisse insbesondere unter angemessenerem Kraftaufwand auf Rollen mit relativ kleinen Durchmessern, insbesondere mit einem Durchmesser von 72 mm, gewickelt werden. Dadurch kann der lager- und transportkostenintensive Einsatz von Rollen mit einem großen Durchmesser, beispielsweise von 200 mm, vermieden werden. Darüber hinaus hat sich die erzielte Biegsamkeit insbesondere für den Einsatz als Beschichtung, Belag und Überzugsmaterial als zufriedenstellend herausgestellt. Außerdem konnten die Erzeugnisse weiter veredelt werden, beispielsweise durch das Auftragen einer Farbschicht und das Prägen der Oberfläche sowie die Bearbeitung mit einer Stollmaschine. Somit wurde mit dem erfindungsgemäßen Verbundmaterial insbesondere die Aufgabe gelöst, ein Verbundmaterial mit hervorragenden Brandschutzeigenschaften bereitzustellen, ohne auf halogenhaltige Brandschutzmittel zurückgreifen zu müssen, dessen mechanischen Eigenschaften ein breites Spektrum an Einsatzgebieten eröffnet und somit das Entsorgungsproblem von faserhaltigen Produkten, insbesondere Lederprodukten, wie Lederfaserstoffe, zu großen Teilen löst.

Ferner wiesen die gemäß den Beispielen 1 bis 4 hergestellten Verbundmaterialien ein nichtthermoplastisches Verhalten auf, waren insbesondere durch Erhitzen nach dem Trocknen nicht besser verformbar. Zudem erwiesen sich die so hergestellten Verbundstoffe als sehr emissionsarm im Hinblick auf verschiedene Tests, etwa Gesamtemission nach VDA 277 oder VDA 278; Fog-Wert, Gesamtemission nach AgBB/DIN EN ISO 16000; und TVOC 3d (total volatile organic compound; 3 Tage) Emission. Sowohl das nicht-thermoplastische Verhalten als auch die geringe Emission konnten besonders ausgeprägt gegenüber solchen Verbundmaterialien beobachtet werden, in denen aus dem Stand der Technik bekannte Styrol-Acrylat-basierte Bindemittel, etwa der Acronal-Reihe, BASF, verwendet wurden.

Die in der vorstehenden Beschreibung und den Ansprüchen offenbarten Merkmale können sowohl einzeln als auch in beliebiger Kombination für die Realisierung der Erfindung in den verschiedenen Ausgestaltungen von Bedeutung sein.

## Patentansprüche

1. Verbundmaterial, umfassend ein Fasermaterial, ein Bindemittel und ein halogenfreies Flammschutzmittel.

2. Verbundmaterial nach Anspruch 1, wobei das halogenfreie Flammschutzmittel frei von Bor und/oder frei von Antimon ist.

3. Verbundmaterial nach Anspruch 1 oder 2, wobei das Flammschutzmittel ausgewählt ist aus der Gruppe bestehend aus Blähgraphit, Aluminiumhydroxid, roter Phosphor, Magnesiumhydroxid, plättchenförmiges Silikat, insbesondere Vermiculit, ein Phosphat, insbesondere Aluminiumphosphat, ein Polyphosphat, insbesondere Aluminiumpolyphosphat oder Ammoniumpolyphosphat, oder Mischungen von zwei oder mehr davon, wobei vorzugsweise das Flammschutzmittel eine Kombination von Blähgraphit mit wenigstens einem weiteren Flammschutzmittel, insbesondere ausgewählt aus der Gruppe bestehend aus Aluminiumhydroxid, rotem Phosphor, Magnesiumhydroxid und einem Polyphosphat, aufweist.

4. Verbundmaterial nach einem der vorstehenden Ansprüche, wobei
- das Verbundmaterial das Fasermaterial in einer Menge von 20 Gew.-% bis 80 Gew.-%, vorzugsweise 25 Gew.-% bis 70 Gew.-%, besonders bevorzugt 30 Gew.-% bis 60 Gew.-% oder 30 bis 50 Gew.-%, bezogen auf das Gesamtgewicht des Verbundmaterials, umfasst, und/oder wobei
- der Anteil des Bindemittels 5 bis 60 Gew.-%, vorzugsweise 10 bis 50 Gew.-%, besonders bevorzugt 20 bis 35 Gew.-%, bezogen auf das Gesamtgewicht des Verbundmaterials, beträgt.

5. Verbundmaterial nach einem der vorstehenden Ansprüche, wobei das Verbundmaterial das Flammschutzmittel in einer Menge von 1 Gew.-% bis 50 Gew.-%, vorzugsweise im Bereich von 2 bis 40 Gew-% oder von 3 bis 30 Gew.-%, besonders bevorzugt im Bereich von 5 Gew.-% bis 25 Gew.-%, bezogen auf das Gesamtgewicht des Verbundmaterials, umfasst.

6. Verbundmaterial nach einem der vorstehenden Ansprüche, wobei das Flammschutzmittel Blähgraphit umfasst, vorzugsweise aus Blähgraphit besteht, und
- in einer Menge von 1 Gew.-% bis 20 Gew.-%, vorzugsweise im Bereich 2 Gew.-% bis 20 Gew.-%, besonders bevorzugt im Bereich von 3 Gew.-% bis 20 Gew.-%, 5 Gew.-% bis 20 Gew.-%, 7,5 Gew.-% bis 20 Gew.-%, 10 Gew.-% bis 20 Gew.-% oder 15 Gew.-% bis 20 Gew.-%, bezogen auf das Gesamtgewicht des Verbundmaterials, in dem Verbundmaterial enthalten ist, und/oder wobei
- der Blähgraphit wenigstens 90 Gew.-% Kohlenstoff, bezogen auf das Gesamtgewicht des Blähgraphits, umfasst und/oder eine Expansion von wenigstens 20 cm³/g aufweist und/oder eine Partikelgrößenverteilung hat, in der wenigstens 20 % der Partikel einen Partikeldurchmesser von mehr als 75 µm haben.

7. Verbundmaterial nach einem der vorstehenden Ansprüche, wobei das Flammschutzmittel Aluminium- und/oder Magnesiumhydroxid umfasst, vorzugsweise aus Aluminium-und/oder Magnesiumhydroxid besteht, und
- in einer Menge von 5 Gew.-% bis 50 Gew.-%, vorzugsweise im Bereich 10 Gew.-% bis 40 Gew.-%, noch bevorzugter zwischen 15 und 40 Gew.-%, besonders bevorzugt im Bereich 20 Gew.-% bis 30 Gew.-% oder im Bereich 23 Gew.-% bis 35 Gew.-%, bezogen auf das Gesamtgewicht des Verbundmaterials, in dem Verbundmaterial enthalten ist, und/oder
- wobei die mittlere Partikelgröße D50 des Aluminiumhydroxids im Bereich von 1 µm bis 50 µm, insbesondere von 1 µm bis 40 µm, 30 µm, 20 µm oder 10 µm, vorzugsweise im Bereich von 1,5 µm bis 10 µm, liegt.

8. Verbundmaterial nach einem der vorstehenden Ansprüche, wobei das Flammschutzmittel roten Phosphor umfasst, vorzugsweise aus rotem Phosphor besteht, und in einer Menge von 0,5 Gew.-% bis 15 Gew.-%, vorzugsweise im Bereich von 1 Gew.-% bis 10 Gew.-%, besonders bevorzugt im Bereich 2 Gew.-% bis 5 Gew.-%, bezogen auf das Gesamtgewicht des Verbundmaterials, in dem Verbundmaterial enthalten ist.

9. Verbundmaterial nach einem der vorstehenden Ansprüche, wobei das Verbundmaterial
- eine Kombination aus Blähgraphit und Roter Phosphor, insbesondere in einer Menge zwischen 2 Gew.-% und 15 Gew-%, vorzugsweise zwischen 3,5 Gew.-% und 10 Gew.-%, bezogen auf das Gesamtgewicht des Verbundmaterials, oder
- eine Kombination aus Blähgraphit und Aluminiumhydroxid, insbesondere in einer Menge zwischen 10 Gew.% und 50 Gew-%, vorzugsweise zwischen 15 Gew.-% und 35 Gew.-%, bezogen auf das Gesamtgewicht des Verbundmaterials, aufweist.

10. Verbundmaterial nach einem der vorangehenden Ansprüche, wobei das Fasermaterial organisches Fasermaterial, insbesondere
- Pflanzenfasermaterial, wie Samenfasermaterial, insbesondere Baumwolle und/oder Kapok, Bastfasermaterial, insbesondere Hanf, Flachs, Jute, Sunn, Kenaf, Urena, Rosella, Ramie und/oder Nessel, Hartfasermaterial, insbesondere Sisal, Hennequen, Abaka, Fique, Ananas und/oder Banane, und/oder Fruchtfasermaterial, insbesondere Kokos, und/oder
- Tierfasermaterial, wie Lederfasermaterial, Wollfasermaterial und/oder Seidenfasermaterial, aufweist.

11. Verbundmaterial nach einem der vorangehenden Ansprüche, wobei das Verbundmaterial ferner zumindest ein Additiv umfasst, vorzugsweise ausgewählt aus der Gruppe, bestehend aus einem anorganischen Salz, einem Farbmittel, einem Gleitmittel, einem Weichmacher, einem Fettungsmittel, einem Gerbstoff, einem Nachgerbstoff, einem Flockungsmittel, einem Fixiermittel, einem Entwässerungshilfsmittel, einem Nassfestmittel, einem Füllstoff und Mischungen von zwei oder mehr davon.

12. Flächiges, insbesondere bahnförmiges, Erzeugnis, umfassend das Verbundmaterial nach einem der vorangehenden Ansprüche, insbesondere wobei das Erzeugnis auf eine Rolle gewickelt oder in Platten zugeschnitten ist.

13. Erzeugnis nach Anspruch 12, das von dem Flammschutzmittel durchsetzt ist, insbesondere gleichmäßig durchsetzt ist.

14. Verwendung des Verbundmaterials nach einem der Ansprüche 1 bis 11 oder des Erzeugnisses nach einem der Ansprüche 12 bis 13, zur
- Beschichtung, insbesondere Ummantelung oder Kaschierung, von
- Paneelen, wie Wandpaneelen, Bodenpaneelen, Deckenpaneelen oder Fensterrahmenpaneelen, insbesondere im Bereich von Fahrzeuginnenräumen, Wohnräumen und Gewerberäumen, oder von
- Einrichtungs- und Gebrauchsgegenständen, wie Möbeln, Dekorationen, Elektrogeräten und Handtaschen, insbesondere in der Modeindustrie, und/oder
- zur Herstellung von
- Belägen, wie Wandbelägen, insbesondere Tapeten, Bodenbelägen, Deckenbelägen, Fensterbelägen oder Türseitenverkleidungen insbesondere im Bereich von Fahrzeuginnenräumen, Wohnräumen und Gewerberäumen, von
- Wandelementen, wie Raumtrennern, insbesondere im Bereich von Fahrzeuginnenräumen, Wohnräumen und Gewerberäumen, von
- Überzugsmaterial, wie Kissenbezüge, Sitzbezüge oder Abdeckungen, insbesondere von Sitzrückenschalen, insbesondere im Fahrzeuginnenbereich, von
- Schuhkomponenten, insbesondere Hinterkappen, Absätzen, Lauf- und Brandsohlen, und/oder von
- Modeaccessoires, Produkte zur Ausstattung von Verkehrsmitteln oder Bauprodukten.

15. Verfahren zum Herstellen eines, insbesondere nach einem der Ansprüche 1 bis 11 ausgebildeten, Verbundmaterials oder eines, insbesondere nach einem der Ansprüche 12 bis 13 ausgebildeten, flächigen Erzeugnisses, umfassend die Schritte:
a) Bereitstellen eines Fasermaterials, das vorzugsweise Lederfasermaterial umfasst;
b) Bereitstellen eines halogenfreien Bindemittels;
c) Bereitstellen eines Flammschutzmittels;
d) Vermengen des Bindemittels, des Fasermaterials und eines Fluids, insbesondere Wasser, zu einem Gemisch, insbesondere Faserbrei; und
e) Trocknen des Gemisches, um das Verbundmetarial zu erhalten;
wobei das Flammschutzmittel in Schritt d) mit in das Gemisch vermengt wird und/oder während oder nach dem Schritt e) auf das Verbundmaterial aufgetragen wird.
